(19) Europäisches Patentamt
European Patent Office
Office européen des brevets

(11) **EP 4 712 674 A1**

(12) # EUROPEAN PATENT APPLICATION
published in accordance with Art. 153(4) EPC

(43) Date of publication:
**18.03.2026 Bulletin 2026/12**

(21) Application number: **24803709.5**

(22) Date of filing: **08.05.2024**

(51) International Patent Classification (IPC):
***H04W 76/14*** *(2018.01)* ***H04W 8/00*** *(2009.01)*
***H04W 28/02*** *(2009.01)* ***H04W 88/04*** *(2009.01)*
***H04W 92/18*** *(2009.01)*

(52) Cooperative Patent Classification (CPC):
**H04W 8/00; H04W 28/02; H04W 76/14; H04W 88/04; H04W 92/18**

(86) International application number:
**PCT/KR2024/006178**

(87) International publication number:
**WO 2024/232656 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2023 KR 20230060124**

(71) Applicant: **LG Electronics Inc.**
**Yeongdeungpo-gu**
**Seoul 07336 (KR)**

(72) Inventors:
- **BACK, Seoyoung**
  **Seoul 06772 (KR)**
- **LEE, Seungmin**
  **Seoul 06772 (KR)**
- **LEE, Youngdae**
  **Seoul 06772 (KR)**
- **PARK, Giwon**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR SPLIT QOS-RELATED OPERATION OF RELAY UE IN UE-TO-UE RELAY IN WIRELESS COMMUNICATION SYSTEM**

(57) An embodiment relates to an operation method of a relay user equipment (UE) in a UE-to-UE relay in a wireless communication system, the method comprising: establishing, by the relay UE, a first PC5 connection with a first remote UE; establishing, by the relay UE, a second PC5 connection with a second remote UE, wherein the relay UE includes a split QoS related to the first PC5 connection and the second PC5 connection; and reporting, to a serving base station of the relay UE by the relay UE, information for identifying the first remote UE and information for identifying the second remote UE, together with the split QOS related to the second PC5 connection.

FIG. 22

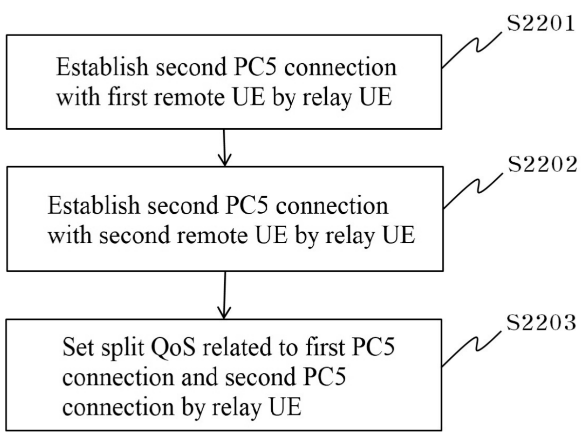


EP 4 712 674 A1

## Description

### TECHNICAL FIELD

The following description relates to a wireless communication system, and more particularly, to an operation method and device related to split quality of service (QoS) settings and reporting of a relay user equipment (UE) in a UE-to-UE relay.

### BACKGROUND

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

## DISCLOSURE

### Technical Problem

The present disclosure has a technical object related to an operation method and device related to split quality of service (QoS) settings and reporting of a relay UE in a UE-to-UE relay.

### Technical Solution

According to an embodiment, an operation method of a relay user equipment (UE) in a UE-to-UE relay in a wireless communication system includes establishing a first PC5 connection with a first remote UE, by the relay UE, establishing a second PC5 connection with a second remote UE, by the relay UE, and setting split quality of service (QoS) related to the first PC5 connection and the second PC5 connection, wherein the relay UE reports information identifying the first remote UE and information identifying the second remote UE, along with split QoS related to the second PC5 connection, to a serving base station (BS) of the relay UE.

According to an embodiment, a relay user equipment (UE) in a UE-to-UE relay in a wireless communication system includes at least one processor, and at least one computer memory operably connected to the at least one processor and storing instructions that, when executed, cause the at least one processor to perform operations, wherein the operations include establishing a first PC5 connection with a first remote UE, by the relay UE, establishing a second PC5 connection with a second remote UE, by the relay UE, and setting split quality of service (QoS) related to the first PC5 connection and the second PC5 connection, and the relay UE reports information identifying the first remote UE and information identifying the second remote UE, along with split QoS related to the second PC5 connection, to a serving base station (BS) of the relay UE.

According to an embodiment, a non-volatile computer-readable storage medium storing at least one computer program comprising an instruction that, when executed by at least one processor, cause the at least one processor to perform operations for a relay user equipment (UE) is provided, the operations including establishing a first PC5 connection with a first remote UE, by the relay UE, establishing a second PC5 connection with a second remote UE, by the relay UE, and setting split quality of service (QoS) related to the first PC5 connection and the second PC5 connection, wherein the relay UE reports information identifying the first remote UE and information identifying the second remote UE, along with split QoS related to the second PC5 connection, to a serving base station (BS) of the relay UE.

The reporting may be performed via sidelinkUEInformation (SUI).

The relay UE may be in an RRC connected state.

The relay UE may be a Mode 1 UE.

The split QoS may be used for resource allocation for the first remote UE or the second remote UE of the BS.

The method may further include allocating a local ID for the first remote UE by the relay UE and allocating a local ID for the second remote UE by the relay UE.

The first PC5 connection and the second PC5 connection may be related to establishing an end-to-end PC5 connection between the first remote UE and the second remote UE.

The relay UE may transmit a split QoS related to the first PC5 connection to the first remote UE.

The split QoS related to the first PC5 connection may be reported to the BS by the first remote UE.

Information of the split QoS may be related to one of a plurality of end-to-end QoSs between the first remote UE and the second remote UE.

## Advantageous Effects

According to an embodiment, it may possible to enable sidelink (SL) and end-to-end SL settings considering quality of service (QoS) during a user equipment (UE)-to-UE relay operation.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram for explaining comparison between vehicle-to-everything (V2X) communication based on pre-new radio (NR) radio access technology (RAT) and V2X communication based on NR;
FIG. 2 illustrates the structure of a Long Term Evolution (LTE) system according to an embodiment of the present disclosure;
FIG. 3 illustrates radio protocol architectures for user and control planes according to an embodiment of the present disclosure;
FIG. 4 illustrates the structure of a new radio (NR) system according to an embodiment of the present disclosure;
FIG. 5 illustrates a functional division between a next generation radio access network (NG-RAN) and a fifth-generation core (5GC) according to an embodiment of the present disclosure;
FIG. 6 illustrates the structure of a radio frame of NR to which embodiment(s) are applicable;
FIG. 7 illustrates the structure of a slot in an NR frame according to an embodiment of the present disclosure;
FIG. 8 illustrates a radio protocol architecture for sidelink (SL) communication according to an embodiment of the present disclosure;
FIG. 9 illustrates a radio protocol architecture for SL communication according to an embodiment of the present disclosure;
FIG. 10 illustrates a synchronization source or synchronization reference of V2X according to an embodiment of the present disclosure;
FIG. 11 illustrates a procedure for a user equipment (UE) to perform V2X or SL communication depending on transmission modes according to an embodiment of the present disclosure.;
FIG. 12 illustrates a procedure for performing path switching by a UE according to an embodiment of the present disclosure;
FIG. 13 illustrates direct to indirect path switching;
FIGS. 14 to 15 are diagrams for explaining UE-to-UE relay selection;
FIGS. 16 to 18 are diagrams for explaining layer-2 UE-to-UE relaying;
FIGS. 19 to 20 are diagrams for explaining QoS;
FIG. 21 illustrates a protocol stack in a UE-to-UE relay;
FIGS. 21 to 27 are diagrams for explaining embodiments; and
FIGS. 28 to 34 are diagrams illustrating various devices to which the embodiments(s) are applicable.

## DETAILED DESCRIPTION

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".
In various embodiments of the present disclosure, "or" should be interpreted as "and/or". For example, "A or B" may include "only A", "only B", and/or "both A and B". In other words, "or" should be interpreted as "additionally or alternatively".
Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1GHz, an intermediate frequency band between 1GHz and 10GHz, and a high frequency (millimeter) band of 24GHz or above.

While the following description is given mainly in the context of LTE-A or 5G NR for the clarity of description, the technical idea of an embodiment of the present disclosure is not limited thereto.

FIG. 2 illustrates the structure of an LTE system according to an embodiment of the present disclosure. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

FIG. 3(a) illustrates a user-plane radio protocol architecture according to an embodiment of the disclosure.

FIG. 3(b) illustrates a control-plane radio protocol architecture according to an embodiment of the disclosure. A user plane is a protocol stack for user data transmission, and a control plane is a protocol stack for control signal transmission.

Referring to FIGS. 3(a) and 3(b), the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

FIG. 4 illustrates the structure of an NR system according to an embodiment of the present disclosure.

Referring to FIG. 4, a next generation radio access network (NG-RAN) may include a next generation Node B (gNB) and/or an eNB, which provides user-plane and control-plane protocol termination to a UE. In FIG. 4, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

FIG. 5 illustrates functional split between the NG-RAN and the 5GC according to an embodiment of the present disclosure.

Referring to FIG. 5, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

FIG. 6 illustrates a radio frame structure in NR, to which embodiment(s) of the present disclosure is applicable.

Referring to FIG. 6, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

[Table 1] below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

[Table 2] below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource including the same number of symbols (e.g., a subframe, slot, or TTI) (collectively referred to as a time unit (TU) for convenience) may be configured to be different for the aggregated cells.

In NR, various numerologies or SCSs may be supported to support various 5G services. For example, with an SCS of 15kHz, a wide area in traditional cellular bands may be supported, while with an SCS of 30kHz/60kHz, a dense urban area, a lower latency, and a wide carrier bandwidth may be supported. With an SCS of 60kHz or higher, a bandwidth larger than 24.25GHz may be supported to overcome phase noise.

An NR frequency band may be defined by two types of frequency ranges, FR1 and FR2. The numerals in each frequency range may be changed. For example, the two types of frequency ranges may be given in [Table 3]. In the NR system, FR1 may be a "sub 6GHz range" and FR2 may be an "above 6GHz range" called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerals in a frequency range may be changed in the NR system. For example, FR1 may range from 410MHz to 7125MHz as listed in [Table 4]. That is, FR1 may include a frequency band of 6GHz (or 5850, 5900, and 5925MHz) or above. For example, the frequency band of 6GHz (or 5850, 5900, and 5925MHz) or above may include an unlicensed band. The unlicensed band may be used for various purposes, for example, vehicle communication (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

FIG. 7 illustrates a slot structure in an NR frame according to an embodiment of the present disclosure.

Referring to FIG. 7, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case.

A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Each element may be referred to as a resource element (RE) in a resource grid, to which one complex symbol may be mapped.

A radio interface between UEs or a radio interface between a UE and a network may include L1, L2, and L3. In various embodiments of the present disclosure, L1 may refer to the PHY layer. For example, L2 may refer to at least one of the MAC layer, the RLC layer, the PDCH layer, or the SDAP layer. For example, L3 may refer to the RRC layer.

Now, a description will be given of sidelink (SL) communication.

FIG. 8 illustrates a radio protocol architecture for SL communication according to an embodiment of the present disclosure. Specifically, FIG. 8(a) illustrates a user-plane protocol stack in LTE, and FIG. 8(b) illustrates a control-plane protocol stack in LTE.

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

FIG. 10 illustrates a synchronization source or synchronization reference of V2X according to an embodiment of the present disclosure.

Referring to FIG. 10, in V2X, a UE may be directly synchronized with global navigation satellite systems (GNSS). Alternatively, the UE may be indirectly synchronized with the GNSS through another UE (within or out of network coverage). If the GNSS is configured as a synchronization source, the UE may calculate a direct frame number (DFN) and a subframe number based on a coordinated universal time (UTC) and a configured (or preconfigured) DFN offset.

Alternatively, a UE may be directly synchronized with a BS or may be synchronized with another UE that is synchronized in time/frequency with the BS. For example, the BS may be an eNB or a gNB. For example, when a UE is in network coverage, the UE may receive synchronization information provided by the BS and may be directly synchronized with the BS. Next, the UE may provide the synchronization information to another adjacent UE. If a timing of the BS is configured as a synchronization reference, the UE may follow a cell associated with a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the UE fails to detect any cell in the carrier used for V2X/SL communication and fails to receive the synchronization configuration from the serving cell, the UE may conform to a preset synchronization configuration.

Alternatively, the UE may be synchronized with another UE that has failed to directly or indirectly acquire the synchronization information from the BS or the GNSS. A synchronization source and a preference may be preconfigured for the UE. Alternatively, the synchronization source and the preference may be configured through a control message provided by the BS.

SL synchronization sources may be associated with synchronization priority levels. For example, a relationship between synchronization sources and synchronization priorities may be defined as shown in Table 5 or 6. Table 5 or 6 is merely an example, and the relationship between synchronization sources and synchronization priorities may be defined in various ways.

[Table 5]

| Priority level | GNSS-based synchronization | BS-based synchronization (eNB/gNB-based synchronization) |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 6]

| Priority level | GNSS-based synchronization | BS-based synchronization (eNB/gNB-based synchronization) |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with GNSS |
| P3 | BS | GNSS |
| P4 | All UEs directly synchronized with GNSS | All UEs directly synchronized with GNSS |
| P5 | All UEs indirectly synchronized with GNSS | All UEs indirectly synchronized with GNSS |
| P6 | Remaining UE(s) with low priority | Remaining UE(s) with low priority |

In Table 5 or 6, P0 may mean the highest priority, and P6 may mean the lowest priority. In Table 5 or 6, the BS may include at least one of a gNB or an eNB.

Whether to use GNSS-based synchronization or eNB/gNB-based synchronization may be (pre)configured. In a single-carrier operation, the UE may derive a transmission timing thereof from an available synchronization reference having the highest priority.

Hereinafter, a sidelink synchronization signal (SLSS) and synchronization information will be described.

As an SL-specific sequence, the SLSS may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may use the S-PSS to detect an initial signal and obtain synchronization. In addition, the UE may use the S-PSS and the S-SSS to obtain detailed synchronization and detect a synchronization signal ID.

A physical sidelink broadcast channel (PSBCH) may be a (broadcast) channel for transmitting default (system) information that the UE needs to know first before transmitting and receiving SL signals. For example, the default information may include information related to an SLSS, a duplex mode (DM), a time division duplex (TDD) UL/DL configuration, information related to a resource pool, an application type related to the SLSS, a subframe offset, broadcast information, etc. For example, for evaluation of PSBCH performance in NR V2X, the payload size of the PSBCH may be 56 bits including a CRC of 24 bits.

The S-PSS, S-SSS, and PSBCH may be included in a block format (e.g., SL synchronization signal (SS)/PSBCH block) supporting periodical transmission (hereinafter, the SL SS/PSBCH block is referred to as a sidelink synchronization signal block (S-SSB)). The S-SSB may have the same numerology (i.e., SCS and CP length) as that of a physical sidelink control channel (PSCCH)/physical sidelink shared channel (PSSCH) on a carrier, and the transmission bandwidth may exist within a configured (or preconfigured) SL BWP. For example, the S-SSB may have a bandwidth of 11 RBs. For example, the PSBCH may span 11 RBs. In addition, the frequency position of the S-SSB may be configured (or preconfigured). Therefore, the UE does not need to perform hypothesis detection on frequency to discover the S-SSB on the carrier.

The NR SL system may support a plurality of numerologies with different SCSs and/or different CP lengths. In this case, as the SCS increases, the length of a time resource used by a transmitting UE to transmit the S-SSB may decrease. Accordingly, the coverage of the S-SSB may be reduced. Therefore, in order to guarantee the coverage of the S-SSB, the transmitting UE may transmit one or more S-SSBs to a receiving UE within one S-SSB transmission period based on the SCS. For example, the number of S-SSBs that the transmitting UE transmits to the receiving UE within one S-SSB transmission period may be pre-configured or configured for the transmitting UE. For example, the S-SSB transmission period may be 160 ms. For example, an S-SSB transmission period of 160 ms may be supported for all SCSs.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

FIG. 11 illustrates a procedure of performing V2X or SL communication by a UE depending on a transmission mode according to an embodiment of the present disclosure. The embodiment of FIG. 11 may be combined with various embodiemnts of the present disclosure. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 11(a) illustrates a UE operation related to LTE transmission mode 1 or LTE transmission mode 3. Alternatively, for example, FIG. 11(a) illustrates a UE operation related to NR resource allocation mode 1. For example, LTE transmission mode 1 may apply to general SL communication, and LTE transmission mode 3 may apply to V2X communication.

For example, FIG. 11(b) illustrates a UE operation related to LTE transmission mode 2 or LTE transmission mode 4. Alternatively, for example, FIG. 11(b) illustrates a UE operation related to NR resource allocation mode 2.

Referring to FIG. 11 (a), in LTE transmission mode 1, LTE transmission mode 3, or NR resource allocation mode 1, a BS may schedule an SL resource to be used for SL transmission by a UE. For example, in step S8000, the BS may transmit information related to an SL resource and/or information related to a UE resource to a first UE. For example, the UL resource may include a PUCCH resource and/or a PUSCH resource. For example, the UL resource may be a resource to report SL HARQ feedback to the BS.

For example, the first UE may receive information related to a Dynamic Grant (DG) resource and/or information related to a Configured Grant (CG) resource from the BS. For example, the CG resource may include a CG type 1 resource or a CG type 2 resource. In the present specification, the DG resource may be a resource configured/allocated by the BS to the first UE in Downlink Control Information (DCI). In the present specification, the CG resource may be a (periodic) resource configured/allocated by the BS to the first UE in DCI and/or an RRC message. For example, for the CG type 1 resource, the BS may transmit an RRC message including information related to the CG resource to the first UE. For example, for the CG type 2 resource, the BS may transmit an RRC message including information related to the CG resource to the first UE, and the BS may transmit DCI for activation or release of the CG resource to the first UE.

In step S8010, the first UE may transmit a PSCCH (e.g., Sidelink Control Information (SCI) or 1st-stage SCI) to a second UE based on the resource scheduling. In step S8020, the first UE may transmit a PSSCH (e.g., 2nd-stage SCI, MAC PDU, data, etc.) related to the PSCCH to the second UE. In step S8030, the first UE may receive a PSFCH related to the PSCCH/PSSCH from the second UE. For example, HARQ feedback information (e.g., NACK information or ACK information) may be received from the second UE over the PSFCH. In step S8040, the first UE may transmit/report HARQ feedback information to the BS over a PUCCH or PUSCH. For example, the HARQ feedback information reported to the BS may include information generated by the first UE based on HARQ feedback information received from the second UE. For example, the HARQ feedback information reported to the BS may include information generated by the first UE based on a preset rule. For example, the DCI may be a DCI for scheduling of SL. For example, the format of the DCI may include DCI format 3_0 or DCI format 3_1. Table 7 shows one example of DCI for scheduling of SL.

[Table 7]

| |
|---|
| 7.3.1.4.1 Format 3_0<br>DCI format 3_0 is used for scheduling of NR PSCCH and NR PSSCH in one cell.<br>The following information is transmitted by means of the DCI format 3_0 with CRC scrambled by SL-RNTI or SL-CS-RNTI:<br>- Resource pool index - $\lceil \log_2 I \rceil$ bits, where *I* is the number of resource pools for transmission configured by the higher layer parameter *sl-TxPoolScheduling.*<br>- Time gap - 3 bits determined by higher layer parameter *sl-DCI-ToSL-Trans,* as defined in clause 8.1.2.1 of [6, TS 38.214]<br>- HARQ process number - 4 bits.<br>- New data indicator - 1 bit.<br>- Lowest index of the subchannel allocation to the initial transmission - $\lceil \log_2(N^{SL}_{subChannel}) \rceil$ bits as defined in clause 8.1.2.2 of [6, TS 38.214]<br>- SCI format 1-A fields according to clause 8.3.1.1:<br>- Frequency resource assignment.<br>- Time resource assignment.<br>- PSFCH-to-HARQ feedback timing indicator - $\lceil \log_2 N_{fb_timing} \rceil$ bits, where $N_{fb_timing}$ is the number of entries in the higher layer parameter *sl-PSFCH-ToPUCCH,* as defined in clause 16.5 of [5, TS 38.213]<br>- PUCCH resource indicator - 3 bits as defined in clause 16.5 of [5, TS 38.213].<br>- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.<br>- Counter sidelink assignment index - 2 bits<br>- 2 bits as defined in clause 16.5.2 of [5, TS 38.213] if the UE is configured with pdsch-*HARQ-ACK-Codebook = dynamic*<br>- 2 bits as defined in clause 16.5.1 of [5, TS 38.213] if the UE is configured with pdsch-*HARQ-ACK-Codebook = semi-static*<br>- Padding bits, if required<br>If multiple transmit resource pools are provided in *sl-TxPoolScheduling,* zeros shall be appended to the DCI format 3_0 until the payload size is equal to the size of a DCI format 3_0 given by a configuration of the transmit resource pool resulting in the largest number of information bits for DCI format 3_0.<br>If the UE is configured to monitor DCI format 3_1 and the number of information bits in DCI format 3_0 is less than the payload of DCI format 3_1, zeros shall be appended to DCI format 3_0 until the payload size equals that of DCI format 3_1.<br>7.3.1.4.2 Format 3_1<br>DCI format 3_1 is used for scheduling of LTE PSCCH and LTE PSSCH in one cell.<br>The following information is transmitted by means of the DCI format 3_1 with CRC scrambled by SL Semi-Persistent Scheduling V-RNTI:<br>- Timing offset - 3 bits determined by higher layer parameter *sl-TimeOffsetEUTRA-List,* as defined in clause 16.6 of [5, TS 38.213] |

(continued)

| |
|---|
| - Carrier indicator -3 bits as defined in 5.3.3.1.9A of [11, TS 36.212].<br>- Lowest index of the subchannel allocation to the initial transmission - $\lceil \log_2(N^{SL}_{subchannel}) \rceil$ bits as defined in 5.3.3.1.9A of [11, TS 36.212].<br>- Frequency resource location of initial transmission and retransmission, as defined in 5.3.3.1.9A of [11, TS 36.212]<br>- Time gap between initial transmission and retransmission, as defined in 5.3.3.1.9A of [11, TS 36.212]<br>- SL index - 2 bits as defined in 5.3.3.1.9A of [11, TS 36.212]<br>- SL SPS configuration index - 3 bits as defined in clause 5.3.3.1.9A of [11, TS 36.212].<br>- Activation/release indication - 1 bit as defined in clause 5.3.3.1.9A of [11, TS 36.212]. |

Referring to FIG. 11 (b), in an LTE transmission mode 2, an LTE transmission mode 4, or an NR resource allocation mode 2, a UE may determine an SL transmission resource within an SL resource configured by a BS/network or a preconfigured SL resource. For example, the configured SL resource or the preconfigured SL resource may be a resource pool. For example, the UE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in the step S8010, the first UE having self-selected a resource in the resource pool may transmit PSCCH (e.g., Side Link Control Information (SCI) or 1st-stage SCI) to the second UE using the resource. In the step S8020, the first UE may transmit PSSCH (e.g., 2nd-stage SCI, MAC PDU, data, etc.) related to the PSCCH to the second UE. In the step S8030, the first UE may receive PSFCH related to the PSCCH/PSSCH from the second UE.

Referring to FIG. 11 (a) or FIG. 11 (b), for example, the first UE may transmit the SCI to the second UE on the PSCCH. Alternatively, for example, the first UE may transmit two consecutive SCIs (e.g., two-stage SCI) to the second UE on the PSCCH and/or PSSCH. In this case, the second UE may decode the two consecutive SCIs (e.g., two-stage SCI) to receive the PSSCH from the first UE. In the present specification, the SCI transmitted on the PSCCH may be referred to as a 1st SCI, a 1st-stage SCI, or a 1st-stage SCI format, and the SCI transmitted on the PSSCH may be referred to as a 2nd SCI, a 2nd SCI, a 2nd-stage SCI format. For example, the 1st-stage SCI format may include SCI format 1-A, and the 2nd-stage SCI format may include SCI format 2-A and/or SCI format 2-B. Table 8 shows one example of a 1st-stage SCI format.

[Table 8]

| |
|---|
| 8.3.1.1 SCI format 1-A<br>SCI format 1-A is used for the scheduling of PSSCH and $2^{nd}$-stage-SCI on PSSCH<br>The following information is transmitted by means of the SCI format 1-A:<br>- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.<br>- Frequency resource assignment - $\log_2(\frac{N^{SL}_{subChannel}(N^{SL}_{subChannel}+1)}{2})$ bits when the value of the higher layer parameter *sl-MaxNumPerReserve* is configured to 2; otherwise $\log_2(\frac{N^{SL}_{subChannel}(N^{SL}_{subChannel}+1)(2N^{SL}_{subChannel}+1)}{6})$ bits when the value of the higher layer parameter *sl-MaxNumPerReserve* is configured to 3, as defined in clause 8.1.5 of [6, TS 38.214].<br>- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].<br>- Resource reservation period - $\lceil \log_2 N_{rsv_period} \rceil$ bits as defined in clause 16.4 of [5, TS 38.213], where $N_{rsv_period}$ is the number of entries in the higher layer parameter *sl-ResourceReservePeriodList,* if higher layer parameter *sl-MultiReserveResource* is configured; 0 bit otherwise. |

(continued)

| |
|---|
| - DMRS pattern - $\lceil \log_2 N_{\text{pattern}} \rceil$ bits as defined in clause 8.4.1.1.2 of [4, TS 38.211], where $N_{\text{pattern}}$ is the number of DMRS patterns configured by higher layer parameter *sl-PSSCH-DMRS-TimePatternList.* |
| - 2nd-stage SCI format - 2 bits as defined in Table 8.3.1.1-1. |
| - Beta_offset indicator - 2 bits as provided by higher layer parameter *sl-BetaOffsets2ndSCI* and Table 8.3.1.1-2. |
| - Number of DMRS port - 1 bit as defined in Table 8.3.1.1-3. |
| - Modulation and coding scheme - 5 bits as defined in clause 8.1.3 of [6, TS 38.214]. |
| - Additional MCS table indicator - as defined in clause 8.1.3.1 of [6, TS 38.214]: 1 bit if one MCS table is configured by higher layer parameter *sl-Additional-MCS-Table*; 2 bits if two MCS tables are configured by higher layer parameter *sl-Additional-MCS-Table*; 0 bit otherwise. |
| - PSFCH overhead indication - 1 bit as defined clause 8.1.3.2 of [6, TS 38.214] if higher layer parameter *sl-PSFCH-Period* = 2 or 4; 0 bit otherwise. |
| - Reserved - a number of bits as determined by higher layer parameter *sl-NumReservedBits,* with value set to zero. |

Table 9 shows exemplary 2nd-stage SCI formats.

[Table 9]

| |
|---|
| 8.4 Sidelink control information on PSSCH |
| SCI carried on PSSCH is a 2nd-stage SCI, which transports sidelink scheduling information. |
| 8.4.1 2nd-stage SCI formats |
| The fields defined in each of the 2nd-stage SCI formats below are mapped to the information bits $a_0$ to $a_{A-1}$ as follows: |
| Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$. |
| 8.4.1.1 SCI format 2-A |
| SCI format 2-A is used for the decoding of PSSCH, with HARQ operation when HARQ-ACK information includes ACK or NACK, when HARQ-ACK information includes only NACK, or when there is no feedback of HARQ-ACK information. |
| The following information is transmitted by means of the SCI format 2-A: |
| - HARQ process number - 4 bits. |
| - New data indicator - 1 bit. |
| - Redundancy version - 2 bits as defined in Table 7.3.1.1.1-2. |
| - Source ID - 8 bits as defined in clause 8.1 of [6, TS 38.214]. |
| - Destination ID - 16 bits as defined in clause 8.1 of [6, TS 38.214]. |
| - HARQ feedback enabled/disabled indicator - 1 bit as defined in clause 16.3 of [5, TS 38.213]. |
| - Cast type indicator - 2 bits as defined in Table 8.4.1.1-1 and in clause 8.1 of [6, TS 38.214]. |
| - CSI request - 1 bit as defined in clause 8.2.1 of [6, TS 38.214] and in clause 8.1 of [6, TS 38.214]. |

Referring to FIG. 11(a) or FIG. 11(b), in step S8030, a first UE may receive a PSFCH based on Table 10. For example, the first UE and a second UE may determine a PSFCH resource based on Table 10, and the second UE may transmit HARQ feedback to the first UE on the PSFCH resource.

[Table 10]

| |
|---|
| 16.3 UE procedure for reporting HARQ-ACK on sidelink |
| A UE can be indicated by an SCI format scheduling a PSSCH reception to transmit a PSFCH with HARQ-ACK information in response to the PSSCH reception. The UE provides HARQ-<br>ACK information that includes ACK or NACK, or only NACK. |
| A UE can be provided, by *sl-PSFCH-Period,* a number of slots in a resource pool for a period of PSFCH transmission occasion resources. If the number is zero, PSFCH transmissions from the UE in the resource pool are disabled. |

(continued)

| |
|---|
| A UE expects that a slot $t'^{SL}_{k}$ *(0 ≤ k < T'max)* has a PSFCH transmission occasion resource if $k \bmod N_{\text{PSSCH}}^{\text{PSFCH}} = 0$ , where $t'^{SL}_{k}$ is defined in [6, TS 38.214], and $T'_{max}$ is a number of slots that belong to the resource pool within 10240 msec according to [6, TS 38.214], and $N_{\text{PSSCH}}^{\text{PSFCH}}$ is provided by *sl-PSFCH-Period.*<br>A UE may be indicated by higher layers to not transmit a PSFCH in response to a PSSCH reception [11, TS 38.321].<br>If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH transmission in the resource pool. The UE transmits the PSFCH in a first slot that includes PSFCH resources and is at least a number of slots, provided by *sl-MinTimeGapPSFCH,* of the resource pool after a last slot of the PSSCH reception.<br>A UE is provided by *sl-PSFCH-RB-Set* a set of $M_{\text{PRB, set}}^{\text{PSFCH}}$ PRBs in a resource pool for PSFCH transmission in a PRB of the resource pool. For a number of $N_{\text{subch}}$ sub-channels for the resource pool, provided by *sl-NumSubchannel,* and a number of PSSCH slots associated with a PSFCH slot that is less than or equal to $N_{\text{PSSCH}}^{\text{PSFCH}}$ , the UE allocates the $\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$ PRBs from the $M_{\text{PRB, set}}^{\text{PSFCH}}$ PRBs to slot *i* among the PSSCH slots associated with the PSFCH slot and sub-channel j, where $M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right),\ 0 \le i < N_{\text{PSSCH}}^{\text{PSFCH}}$ , $0 \le j < N_{\text{subch}}$, and the allocation starts in an ascending order of *i* and continues in an ascending order of *j.* The UE expects that $M_{\text{PRB, set}}^{\text{PSFCH}}$ is a multiple of $N_{\text{subch}} \cdot N_{\text{PSSCH}}^{\text{PSFCH}}$ .<br>The second OFDM symbol *l'* of PSFCH transmission in a slot is defined as *l' = sl-StartSymbol* + *sl-LengthSymbols* - 2 .<br>A UE determines a number of PSFCH resources available for multiplexing HARQ-ACK information in a PSFCH transmission as $R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$ where $N_{\text{CS}}^{\text{PSFCH}}$ is a number of cyclic shift pairs for the resource pool provided by *sl-NumMuxCS-Pair* and, based on an indication by *sl-PSFCH-CandidateResourceType,*<br>- if *sl-PSFCH-CandidateResourceType* is configured as *startSubCH,* $N_{\text{type}}^{\text{PSFCH}} = 1$ and the $M_{\text{subch, slot}}^{\text{PSFCH}}$ PRBs are associated with the starting sub-channel of the corresponding PSSCH;<br>- if *sl-PSFCH-CandidateResourceType* is configured as *allocSubCH,* $N_{\text{type}}^{\text{PSFCH}} = N_{\text{subch}}^{\text{PSSCH}}$ and the $N_{\text{subch}}^{\text{PSSCH}} \cdot M_{\text{subch, slot}}^{\text{PSFCH}}$ PRBs are associated with the $N_{\text{subch}}^{\text{PSSCH}}$ sub-channels of the corresponding PSSCH.<br>The PSFCH resources are first indexed according to an ascending order of the PRB index, from the $N_{\text{type}}^{\text{PSFCH}} \cdot M_{\text{subch, slot}}^{\text{PSFCH}}$ PRBs, and then according to an ascending order of the cyclic shift pair index from the $N_{\text{CS}}^{\text{PSFCH}}$ cyclic shift pairs.<br>A UE determines an index of a PSFCH resource for a PSFCH transmission in response to a PSSCH reception as $(P_{\text{ID}} + M_{\text{ID}}) mod R_{\text{PRB, CS}}^{\text{PSFCH}}$ where $P_{\text{ID}}$ is a physical layer source ID provided by SCI format 2-A or 2-B [5, TS 38.212] scheduling the PSSCH reception, and $M_{\text{ID}}$ is the identity of the UE receiving the PSSCH as indicated by higher layers if the UE detects a SCI format 2-A with Cast type indicator field value of "01"; otherwise, $M_{\text{ID}}$ is zero.<br>A UE determines a $m_0$ value, for computing a value of cyclic shift $\alpha$ [4, TS 38.211], from a cyclic shift pair index corresponding to a PSFCH resource index and from $N_{\text{CS}}^{\text{PSFCH}}$ using Table 16.3-1. |

Referring to FIG. 11(a), in step S8040, the first UE may transmit SL HARQ feedback to the BS over a PUCCH and/or PUSCH based on Table 11.

[Table 11]

| |
|---|
| 16.5 UE procedure for reporting HARQ-ACK on uplink<br>A UE can be provided PUCCH resources or PUSCH resources [12, TS 38.331] to report HARQ-ACK information that the UE generates based on HARQ-ACK information that the UE obtains from PSFCH receptions, or from absence of PSFCH receptions. The UE reports HARQ-ACK information on the primary cell of the PUCCH group, as described in clause 9, of the cell where the UE monitors PDCCH for detection of DCI format 3_0.<br>For SL configured grant Type 1 or Type 2 PSSCH transmissions by a UE within a time period provided by *sl-PeriodCG,* the UE generates one HARQ-ACK information bit in response to the PSFCH receptions to multiplex in a PUCCH transmission occasion that is after a last time resource, in a set of time resources.<br>For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0.<br>From a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable<br>- for one or more PSFCH reception occasions associated with SCI format 2-A with Cast type indicator field value of "10 "<br>- generate HARQ-ACK information with same value as a value of HARQ-ACK information the UE determines from the last PSFCH reception from the number of PSFCH reception occasions corresponding to PSSCH transmissions or, if the UE determines that a PSFCH is not received at the last PSFCH reception occasion and ACK is not received in any of previous PSFCH reception occasions, generate NACK<br>- for one or more PSFCH reception occasions associated with SCI format 2-A with Cast type indicator field value of "01"<br>- generate ACK if the UE determines ACK from at least one PSFCH reception occasion, from the number of PSFCH reception occasions corresponding to PSSCH transmissions, in PSFCH resources corresponding to every identity $M_{ID}$ of the UEs that the UE expects to receive the PSSCH, as described in clause 16.3; otherwise, generate NACK<br>- for one or more PSFCH reception occasions associated with SCI format 2-B or SCI format 2-A with Cast type indicator field value of "11"<br>- generate ACK when the UE determines absence of PSFCH reception for the last PSFCH reception occasion from the number of PSFCH reception occasions corresponding to PSSCH transmissions; otherwise, generate NACK<br>After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information.<br>The UE generates a NACK when, due to prioritization, as described in clause 16.2.4, the UE does not receive PSFCH in any PSFCH reception occasion associated with a PSSCH transmission in a resource provided by a DCI format 3_0 or, for a configured grant, in a resource provided in a single period and for which the UE is provided a PUCCH resource to report HARQ-ACK information. The priority value of the NACK is same as the priority value of the PSSCH transmission.<br>The UE generates a NACK when, due to prioritization as described in clause 16.2.4, the UE<br>does not transmit a PSSCH in any of the resources provided by a DCI format 3_0 or, for a configured grant, in any of the resources provided in a single period and for which the UE is provided a PUCCH resource to report HARQ-ACK information. The priority value of the NACK is same as the priority value of the PSSCH that was not transmitted due to prioritization.<br>The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant. |

Table 12 below shows details of selection and reselection of an SL relay UE defined in 3GPP TS 36.331. The contents of Table 12 are used as the prior art of the present disclosure, and related necessary details may be found in 3GPP TS 36.331.

[Table 12]

| |
|---|
| 5.10.11.4 Selection and reselection of sidelink relay UE |

(continued)

| |
|---|
| A UE capable of sidelink remote UE operation that is configured by upper layers to search for a sidelink relay UE shall:<br>if out of coverage on the frequency used for sidelink communication, as defined in TS 36.304 [4], clause 11.4; or<br>if the serving frequency is used for sidelink communication and the RSRP measurement of the cell on which the UE camps (RRC_IDLE)/ the PCell (RRC_CONNECTED) is below *threshHigh* within *remoteUE-Config :*<br>2> search for candidate sidelink relay UEs, in accordance with TS 36.133 [16]<br>2> when evaluating the one or more detected sidelink relay UEs, apply layer 3 filtering as specified in 5.5.3.2 across measurements that concern the same ProSe Relay UE ID and using the *filterCoefficient* in *SystemInformationBlockType19* (in coverage) or the preconfigured *filterCoefficient* as defined in 9.3(out of coverage), before using the SD-RSRP measurement results;<br>NOTE 1: The details of the interaction with upper layers are up to UE implementation.<br>2> if the UE does not have a selected sidelink relay UE:<br>3> select a candidate sidelink relay UE which SD-RSRP exceeds *q-RxLevMin* included in either *reselectionInfoIC* (in coverage) or *reselectionInfoOoC* (out of coverage) by *minHyst*;<br>2> else if SD-RSRP of the currently selected sidelink relay UE is below *q-RxLevMin* included in either *reselectionInfoIC* (in coverage) or *reselectionInfoOoC* (out of coverage); or if upper layers indicate not to use the currently selected sidelink relay: (i.e. sidelink relay UE reselection):<br>3> select a candidate sidelink relay UE which SD-RSRP exceeds *q-RxLevMin* included in either *reselectionInfoIC* (in coverage) or *reselectionInfoOoC* (out of coverage) by *minHyst;*<br>2> else if the UE did not detect any candidate sidelink relay UE which SD-RSRP exceeds *q-RxLevMin* included in either *reselectionInfoIC* (in coverage) or *reselectionInfoOoC* (out of coverage) by *minHyst:*<br>3> consider no sidelink relay UE to be selected;<br>NOTE 2: The UE may perform sidelink relay UE reselection in a manner resulting in selection of the sidelink relay UE, amongst all candidate sidelink relay UEs meeting higher layer criteria, that has the best radio link quality. Further details, including interaction with upper layers, are up to UE implementation.<br>5.10.11.5 Sidelink remote UE threshold conditions<br>A UE capable of sidelink remote UE operation shall:<br>1> if the threshold conditions specified in this clause were not met:<br>*2> if threshHigh* is not included in *remoteUE-Config* within *SystemInformationBlockType19*; or<br>2> if *threshHigh* is included in *remoteUE-Config* within *SystemInformationBlockType19*; and the RSRP measurement of the PCell, or the cell on which the UE camps, is below *threshHigh* by *hystMax* (also included within *remoteUE-Config*):<br>3> consider the threshold conditions to be met (entry);<br>else:<br>2> if *threshHigh* is included in *remoteUE-Config* within *SystemInformationBlockType19*; and the RSRP measurement of the PCell, or the cell on which the UE camps, is above *threshHigh* (also included within *remoteUE-Config*):<br>3> consider the threshold conditions not to be met (leave); |

FIG. 12 shows connection management captured in the TR document (3GPP TR 38.836) related to Rel-17 NR SL and a procedure for path switching from direct to indirect. A remote UE needs to establish its own PDU session/DRB with a network before user plane data transmission.

A PC5 unicast link establishment procedure in terms of PC5-RRC of Rel-16 NR V2X may be reused to establish a secure unicast link for L2 UE-to-network relaying between the remote UE and a relay UE before the remote UE establishes a Uu RRC connection with the network through the relay UE.

For both in-coverage and out-of-coverage, when the remote UE initiates a first RRC message for connection establishment with a gNB, a PC5 L2 configuration for transmission between the remote UE and the UE-to-network relay UE may be based on an RLC/MAC configuration defined in the standard. Establishment of Uu SRB1/SRB2 and DRB of the remote UE complies with a legacy Uu configuration procedure for L2 UE-to-network relay.

A high-level connection establishment procedure shown in FIG. 12 is applied to the L2 UE-to-network relay.

In operation S1200, the remote and relay UEs may perform a discovery procedure and establish a PC5-RRC connection in operation S1201 based on the existing Rel-16 procedure.

In operation S1202, the remote UE may transmit a first RRC message (i.e., RRCSetupRequest) for connection establishment with the gNB through the relay UE by using a default L2 configuration of PC5. The gNB responds to the remote UE with an RRCSetup message (S1203). Transmission of RRCSetup to the remote UE uses a default configuration of PC5. When the relay UE does not start in RRC_CONNECTED, the relay UE needs to perform its own connection setup upon receiving a message about the default L2 configuration of PC5. In this operation, details for the relay UE to transmit the RRCSetupRequest/RRCSetup message to the remote UE may be discussed in stage WI.

In operation S1204, the gNB and the relay UE perform a relay channel setup procedure via Uu. According to the configuration of the gNB, the relay/remote UE establishes an RLC channel for relaying SRB1 with the remote UE via PC5. In this operation, a relay channel for SRB1 is prepared.

In operation S1205, the remote UE SRB1 message (e.g., RRCSetupComplete message) is transmitted to the gNB via the relay UE by using the SRB1 relay channel via PC5. The remote UE performs RRC connection via Uu.

In operation S1206, the remote UE and the gNB configure security according to a legacy procedure, and a security message is transmitted through the relay UE.

In operation S1210, the gNB configures an additional RLC channel between the gNB and the relay UE for traffic relay. According to the configuration of the gNB, the relay/remote UE configures an RLC channel between the remote UE and the relay UE for traffic relay. The gNB transmits RRCReconfiguration to the remote UE through the relay UE to configure relay SRB2/DRB. The remote UE transmits RRCReconfigurationComplete in response to the gNB through the relay UE.

For L2 UE-to-network relay in addition to connection establishment procedure:

- The RRC reconfiguration and RRC disconnection procedures may reuse legacy RRC procedures with the message content/configuration design left to stage WI.
- RRC connection reconfiguration and RRC connection resumption procedures may reuse the existing RRC procedure as a baseline by considering the connection establishment procedure of the above L2 UE-to-network relay to handle a relay-specific part along with message content/configuration design. The message content/configuration may be defined later.

FIG. 13 illustrates direct to indirect path switching. For service continuity of L2 UE-to-network relay, the procedure in FIG. 13 may be used when a remote UE switches to an indirect relay UE.

Referring to FIG. 13, in operation S1301, the remote UE measures/discovers a candidate relay UE and then reports one or several candidate relay UEs. The remote UE may filter out an appropriate relay UE that meets higher layer standard during reporting. The report may include the ID and SL RSRP information of the relay UE, and in this case, the PC5 measurement details may be determined later.

In operation S1302, the gNB determines to switch to a target relay UE and the target (re)configuration is optionally transmitted to the relay UE.

In operation S1304, the RRC reconfiguration message for the remote UE may include the ID of the target relay UE, target Uu, and PC5 configuration.

In operation S1305, the remote UE establishes a PC5 connection with the target relay UE when the connection is not established.

In operation S1306, the remote UE feeds back RRCReconfigurationComplete to the gNB via a target path by using the target configuration provided in RRCReconfiguration.

In operation S1307, a data path is switched.

Tables 13 to 16 are 3GPP technical reports related to UE-to-UE relay selection and are used as conventional art in the present disclosure. Fig. 14 in Table 14 and Fig. 15 in Table 16 correspond to FIG. 14 and FIG. 15, respectively.

[Table 13]

| |
|---|
| 6.8 Solution #8: UE-to-UE Relay Selection Without Relay Discovery<br>6.8.1 Description<br>When a source UE wants to communicate with a target UE, it will first try to find the target UE by either sending a Direct Communication Request or a Solicitation message with the target UE info. If the source UE cannot reach the target UE directly, it will try to discover a UE-to-UE relay to reach the target UE which may also trigger the relay to discover the target UE. To be more efficient, this solution tries to integrate target UE discovery and UE-to-UE relay discovery and selection together, including two alternatives:<br>- Alternative 1: UE-to-UE relay discovery and selection can be integrated into the unicast link establishment procedure as described in clause 6.3.3 of TS 23.287 [5].<br>- Alternative 2: UE-to-UE relay discovery and selection is integrated into Model B direct discovery procedure.<br>A new field is proposed to be added in the Direct Communication Request or the Solicitation message to indicate whether relays can be used in the communication. The field can be called relay_indication. When a UE wants to broadcast a Direct Communication Request or a Solicitation message, it indicates in the message whether a UE-to-UE relay could be used. For Release 17, it is assumed that the value of the indication is restricted to single hop. |

(continued)

| |
|---|
| When a UE-to-UE relay receives a Direct Communication Request or a Solicitation message with the relay_indication set, then it shall decide whether to forward the message (i.e. modify the message and broadcast it in its proximity), according to e.g. Relay Service Code if there is any, Application ID, authorization policy (e.g. relay for specific ProSe Service), the current traffic load of the relay, the radio conditions between the source UE and the relay UE, etc.<br>It may exist a situation where multiple UE-to-UE relays can be used to reach the target UE or the target UE may also directly receive the Direct Communication Request or Solicitation message from the source UE. The target UE may choose which one to reply according to e.g. signal<br>strength, local policy (e.g. traffic load of the UE-to-UE relays), Relay Service Code if there is any or operator policies (e.g. always prefer direct communication or only use some specific UE-to-UE relays).<br>The source UE may receive the responses from multiple UE-to-UE relays and may also from the target UE directly, the source UE chooses the communication path according to e.g. signal strength or operator policies (e.g. always prefer direct communication or only use some specific UE-to-UE relays). |

[Table 14]

| |
|---|
| 6.8.2 Procedures<br>6.8.2.1 UE-to-UE relay discovery and selection is integrated into the unicast link establishment procedure (Alternative 1)<br>Fig 14 illustrates the procedure of the proposed method.<br>0. UEs are authorized to use the service provided by the UE-to-UE relays. UE-to-UE relays are authorized to provide service of relaying traffic among UEs. The authorization and the parameter provisioning can use solutions for KI#8, e.g. Sol#36. The authorization can be done when UEs/relays are registered to the network. Security related parameters may be provisioned so that a UE and a relay can verify the authorization with each other if needed.<br>1. UE-1 wants to establish unicast communication with UE-2 and the communication can be either through direct link with UE-2 or via a UE-to-UE relay. Then UE-1 broadcasts Direct Communication Request with relay_indication enabled. The message will be received by relay-1, relay-2. The message may also be received by UE-2 if it is in the proximity of UE-1. UE-1 includes source UE info, target UE info, Application ID, as well as Relay Service Code if there is any. If UE-1 does not want relay to be involved in the communication, then it will made relay_indication disabled.<br>NOTE 1: The data type of relay_indication can be determined in Stage 3. Details of Direct Communication Request/Accept messages will be determined in stage 3.<br>2. Relay-1 and relay-2 decide to participate in the procedure. They broadcast a new Direct Communication Request message in their proximity without relay_indication enabled. If a relay receives this message, it will just drop it. When a relay broadcasts the Direct Communication Request message, it includes source UE info, target UE info and Relay UE info (e.g. Relay UE ID) in the message and use Relay's L2 address as the source Layer-2 ID. The Relay maintains association between the source UE information (e.g. source UE L2 ID) and the new Direct Communication Request.<br>3. UE-2 receives the Direct Communication Requests from relay-1 and relay-2. UE-2 may also receive Direct Communication Request message directly from the UE-1 if the UE-2 is in the communication range of UE-1.<br>4. UE-2 chooses relay-1 and replies with Direct Communication Accept message. If UE-2 directly receives the Direct Communication Request from UE-1, it may choose to setup a direct communication link by sending the Direct Communication Accept message directly to UE-1.<br>After receiving Direct Communication Accept, a UE-to-UE relay retrieves the source UE information stored in step 2 and sends the Direct Communication Accept message to the source UE with its Relay UE info added in the message. |

[Table 15]

| |
|---|
| After step 4, UE-1 and UE-2 have respectively setup the PC5 links with the chosen UE-to-UE relay.<br>NOTE 2: The security establishment between the UE1 and Relay-1, and between Relay-1 and UE-2 are performed before the Relay-1 and UE-2 send Direct Communication Accept message. Details of the authentication/ security establishment procedure are determined by SA WG3. The security establishment procedure can be skipped if there already exists a PC5 link between the source (or target) UE and the relay which can be used for relaying the traffic. |

(continued)

| |
|---|
| 5. UE-1 receives the Direct Communication Accept message from relay-1. UE-1 chooses path according to e.g. policies (e.g. always choose direct path if it is possible), signal strength, etc. If UE-1 receives Direct Communication Accept / Response message request accept directly from UE-2, it may choose to setup a direct PC5 L2 link with UE-2 as described in clause 6.3.3 of TS 23.287 [5], then step 6 is skipped. |
| 6a. For the L3 UE-to-UE Relay case, UE-1 and UE-2 finish setting up the communication link via the chosen UE-to-UE relay. The link setup information may vary depending on the type of relay, e.g. L2 or L3 relaying. Then UE-1 and UE-2 can communicate via the relay. Regarding IP address allocation for the source/remote UE, the addresses can be either assigned by the relay or by the UE itself (e.g. link-local IP address) as defined in clause 6.3.3 of TS 23.287 [5]. |
| 6b. For the Layer 2 UE-to-UE Relay case, the source and target UE can setup an end-to-end PC5 link via the relay. UE-1 sends a unicast E2E Direct Communication Request message to UE-2 via the Relay-1, and UE-2 responds with a unicast E2E Direct Communication Accept message to UE-1 via the Relay-1. Relay-1 transfers the messages based on the identity information of UE-1/UE-2 in the Adaptation Layer. |
| NOTE 3: How Relay-1 can transfer the messages based on the identity information of UE- |
| 1/UE-2 in the Adaptation Layer requires cooperation with RAN2 during the normative phase. |
| NOTE 4: In order to make a relay or path selection, the source UE can setup a timer after sending out the Direct Communication Request for collecting the corresponding response messages before making a decision. Similarly, the target UE can also setup a timer after receiving the first copy of the Direct Communication Request / message for collecting multiple copies of the message from different paths before making a decision. |
| NOTE 5: In the first time when a UE receives a message from a UE-to-UE relay, the UE needs to verify if the relay is authorized be a UE-to-UE relay. Similarly, the UE-to-UE relay may also need to verify if the UE is authorized to use the relay service. The verification details and the how to secure the communication between two UEs through a UE-to-UE relay is to be defined by SA WG3. |

[Table 16]

| |
|---|
| 6.8.2.2 UE-to-UE relay discovery and selection is integrated into Model B direct discovery procedure (Alternative 2) |
| Depicted in Fig 15 is the procedure for UE-UE Relay discovery Model B, and the discovery/selection procedure is separated from hop by hop and end-to-end link establishment. |
| 1. UE-1 broadcasts discovery solicitation message carrying UE-1 info, target UE info (UE-2), Application ID, Relay Service Code if any, the UE-1 can also indicate relay_indication enabled. |
| 2. On reception of discovery solicitation, the candidate Relay UE-R broadcasts discovery solicitation carrying UE-1 info, UE-R info, Target UE info. The Relay UE-R uses Relay's L2 address as the source Layer-2 ID. |
| 3. The target UE-2 responds the discovery message. If the UE-2 receives discovery solicitation message in step 1, then UE-2 responds discovery response in step 3b with UE-1 info, UE-2 info. If not and UE-2 receives discovery solicitation in step 2, then UE-2 responds discovery response message in step 3a with UE-1 info, UE-R info, UE-2 info. |
| 4. On reception of discovery response in step 3a, UE-R sends discovery response with UE-1 info, UE-R info, UE-2 info. If more than one candidate Relay UEs responding discovery response message, UE-1 can select one Relay UE based on e.g. implementation or link qualification. |
| 5. The source and target UE may need to setup PC5 links with the relay before communicating with each other. Step 5a can be skipped if there already exists a PC5 link between the UE-1 and UE-R which can be used for relaying. Step 5b can be skipped if there already exists |
| a PC5 link between the UE-2 and UE-R which can be used for relaying. |
| 6a. Same as step 6a described in clause 6.8.2.1. |
| 6b. For the Layer-2 UE-to-UE Relay, the E2E unicast Direct Communication Request message is sent from UE1 to the selected Relay via the per-hop link (established in steps 5a) and the Adaptation layer info identifying the peer UE (UE3) as the destination. The UE-to-UE Relay transfers the E2E messages based on the identity information of peer UE in the Adaptation Layer. The initiator (UE1) knows the Adaptation layer info identifying the peer UE (UE3) after a discovery procedure. UE3 responds with E2E unicast Direct Communication Accept message in the same way. |
| NOTE 1: For the Layer 2 UE-to-UE Relay case, whether step5b is performed before step 6b or triggered during step 6b will be decided at normative phase. |
| NOTE 2: How Relay-1 can transfer the messages based on the identity information of UE-1/UE-2 in the Adaptation Layer requires cooperation with RAN2 during the normative phase. |

(continued)

| |
|---|
| 6.8.3 Impacts on services, entities and interfaces<br>UE impacts to support new Relay related functions. |

Table 17 is a 3GPP 23.700-33 document related to Layer-2 UE-to-UE Relaying, which is used as the related art of the present disclosure. Figure 6.30.2.1.1-1, Figure 6.30.2.1.2-1, and Figure 6.30.2.1.2-1 in Table 17 correspond to FIG. 17, FIG. 18, and FIG. 19, respectively.

[Table 17]

| |
|---|
| 6.30 Solution #30: Layer-2 UE-to-UE Relaying<br>6.30.1 Description<br>The solution applies to Key Issue #1 "Support of UE-to-UE Relay", and is used for Layer-2 UE-to-UE Relay.<br>The solution proposes the procedure of Layer-2 UE-to-UE Relay discovery and connection establishment.<br>6.30.2 Procedures<br>6.30.2.1 Procedures for UE-to-UE Relay discovery<br>6.30.2.1.1 Procedure for UE-to-UE Relay discovery with Model A<br>Depicted in figure 6.30.2.1.1-1 is the procedure for UE-to-UE Relay discovery with Model A.<br>1. The UE-to-UE Relay has discovered other UEs in proximity via the direct discovery or direct communication procedures.<br>2. The UE-to-UE Relay sends an Announcement message. The Announcement message may include the Type of Discovery Message, User Info ID of the UE-to-UE Relay, RSC, and User Info ID of the proximity UEs.<br>The Source Layer-2 ID of the Announcement message is self-assigned by the UE-to-UE Relay, and the Destination Layer-2 ID is selected based on the ProSe policy.<br>6.30.2.1.2 Procedure for UE-to-UE Relay discovery with Model B<br>Depicted in figure 6.30.2.1.2-1 is the procedure for UE-to-UE Relay discovery with Model B.<br>1. The Source UE broadcasts a Solicitation message. The Solicitation message may include the Type of Discovery Message, User Info ID of Source UE, User Info ID of Target UE, and RSC.<br>The Source Layer-2 ID of the Announcement message is self-assigned by the Source UE, and the Destination Layer-2 ID is selected based on the ProSe policy.<br>2. On reception of the Solicitation message, a candidate UE-to-UE Relay (e.g., UE-to-UE Relay 1 and UE-to-UE Relay 2) broadcasts a Solicitation message carrying the User Info ID of Source UE, User Info ID of Target UE, User Info ID of the UE-to-UE Relay, and the RSC.<br>The Source Layer-2 ID of the Announcement message is self-assigned by the candidate UE-to-UE Relay, and the Destination Layer-2 ID is selected based on the ProSe policy.<br>3. The Target UE chooses UE-to-UE Relay 1 from the candidate UE-to-UE Relays based on, e.g. signal strength. The Target UE responds to UE-to-UE Relay 1.<br>4. UE-to-UE Relay 1 responds to the Source UE.<br>6.30.2.2 Procedures for Layer-2 UE-to-UE Relay connection establishment<br>Depicted in figure 6.30.2.2-1 is the procedure for Layer-2 UE-to-UE Relay connection establishment.<br>1. Service authorisation and policy provisioning is performed for the Source UE, Target UE and UE-to-UE Relay as described in the solutions for KI#6.<br>2. UE-to-UE Relay discovery is performed as described in clause 6.30.2.1.<br>3. The Source UE and Target UE may need to setup or modify the PC5 link with UE-to-UE Relay.<br>If there is no PC5 link between the Source UE and the UE-to-UE Relay that can be used for relaying, e.g. based on RSC, then a new PC5 link needs to be setup in step 3a by the Source UE, otherwise the existing link can be modified by the Source UE to support communication between the Source and Target UEs. User Info ID of Target UE is included in the Direct Communication Request message or Link Modification Request message. The Target User Info for the Target UE is obtained from the discovery procedure performed in step 2. |

(continued)

| |
|---|
| If there is no PC5 link between the UE-to-UE Relay and the Target UE that can be used for relaying, e.g. based on RSC, then a new PC5 link needs to be setup in step 3b by the UE-to-UE Relay, otherwise the existing link can be modified by the UE-to-UE Relay to support communication between the Source and Target UEs.<br>If a new PC5 link needs to be setup in either step 3a or step 3b the destination Layer-2 ID may be broadcast or unicast Layer-2 ID and the Source Layer-2 ID is self-assigned by the Source UE or the UE-to-UE Relay. When a unicast destination Layer-2 ID is used, it is obtained during the discovery procedure performed in step 2.<br>NOTE 1: RAN coordination on support of per-hop PC5 link sharing between the Source UE and UE-to-UE Relay, and UE-to-UE Relay and Target UE is needed.<br>4. The Source UE sends a Direct Communication Request message to initiate the unicast Layer-2 link establishment procedure with the Target UE. The Direct Communication Request message includes User Info ID of Source UE, User Info ID of Target UE, QoS Info (PFI and PC5 QoS parameters) and RSC.<br>The Direct Communication Request message is sent over the PC5 link with the UE-to-UE Relay. The Source Layer-2 ID and the Destination Layer-2 ID of the PC5 link setup or modified in step 3a are used.<br>The UE-to-UE Relay forwards the Direct Communication Request message towards the Target UE, and the Direct Communication Request message is sent over the PC5 link with the Target UE. The Source Layer-2 ID and the Destination Layer-2 ID of the PC5 link setup or modified in step 3b are used.<br>5. The Target UE triggers the security procedure with Source UE.<br>6. The Target UE sends a Direct Communication Accept message to the Source UE. The Direct Communication Accept message includes User Info ID of Source UE, User Info ID of Target UE, QoS Info (PFI and PC5 QoS parameters) and RSC.<br>NOTE 2: RAN WGs will define how the E2E QoS will be handled and split over the PC5 links.<br>7. The end-to-end QoS flow is established between Source UE and Target UE. The data is transferred between the Source UE and the Target UE via the UE-to-UE Relay.<br>Editor's note: How the PC5-S messages in steps 4-6 and the data in step 7 are forwarded by the UE-to-UE Relay is to be determined by RAN2, such as based on an Adaptation layer. |

Table 18 below corresponds to the related art of the present disclosure as 'New Rel-18 WID on NR sidelink relay enhancements'.

[Table 18]

| |
|---|
| 1. Specify mechanisms to support single-hop Layer-2 and Layer-3 UE-to-UE relay (i.e., source UE -> relay UE -> destination UE) for unicast [RAN2, RAN3, RAN4].<br>A. Common part for Layer-2 and Layer-3 relay to be prioritized until RAN#98<br>i. Relay discovery and (re)selection [RAN2, RAN4]<br>ii. Signalling support for Relay and remote UE authorization if SA2 concludes it is needed [RAN3]<br>B. Layer-2 relay specific part<br>i. UE-to-UE relay adaptation layer design [RAN2]<br>ii. Control plane procedures [RAN2]<br>iii. QoS handling if needed, subject to SA2 progress [RAN2]<br>Note 1A: This work should take into account the forward compatibility for supporting more than one hop in a later release.<br>Note 1B: A remote UE is connected to only a single relay UE at a given time for a given destination UE. |

Tables 19 to 21 are 3GPP 23.287 documents on QoS handling and are used as the related art of the present disclosure. In Tables 19 to 21, Figure 5.4.1.1.1-1 corresponds to FIG. 19, and Figure 5.4.1.1.3-1 corresponds to FIG. 20.

[Table 19]

| |
|---|
| 5.4 QoS handling for V2X communication |

(continued)

| |
|---|
| 5.4.1 QoS handling for V2X communication over PC5 reference point<br>5.4.1.1 QoS model<br>5.4.1.1.1 General overview<br>For LTE based PC5, the QoS handling is defined in TS 23.285 [8], based on ProSe Per-Packet Priority (PPPP) and ProSe Per-Packet Reliability (PPPR).<br>For NR based PC5, a QoS model similar to that defined in TS 23.501 [6] for Uu reference point is used, i.e. based on 5QIs, with additional parameter of Range as described in clauses 5.4.2, 5.4.3 and 5.4.4. For the V2X communication over NR based PC5 reference point, a PC5 QoS Flow is associated with a PC5 QoS Rule and the PC5 QoS parameters as defined in clause 5.4.2. A set of standardized PC5 5QIs (PQI) are defined in clause 5.4.4. The UE may be configured with a set of default PC5 QoS parameters to use for the V2X service types, as defined in clause 5.1.2.1. For NR based unicast, groupcast and broadcast mode communication over PC5, Per-flow QoS model for PC5 QoS management shall be applied. Figure 5.4.1.1.1-1 illustrates an example mapping of Per-flow QoS model for NR PC5. Details of PC5 QoS Rules and PFI related operations are described in clauses 5.4.1.1.2 and 5.4.1.1.3.<br>The following principles apply when the V2X communication is carried over PC5 reference point:<br>- Application layer may set the V2X Application Requirements for the V2X communication, using either TS 23.285 [8] defined PPPP and PPPR model or the PQI and Range model as described in clause 5.4.4. Depending on the type of PC5 reference point, i.e. LTE based or NR based, selected for the transmission, the UE may map the application layer provided V2X Application Requirements to the suitable QoS parameters to be passed to the lower layer. The mapping between the two QoS models is defined in clause 5.4.2. For V2X communication over NR based PC5, different V2X packets may require different QoS treatments. In that case, the V2X packets shall be sent from the V2X layer to the Access Stratum layer within PC5 QoS Flows identified by different PFIs.<br>- When groupcast mode of V2X communication over NR based PC5 is used, a Range parameter is associated with the QoS parameters for the V2X communication. The Range may be provided by V2X application layer or use a default value mapped from the V2X service type based on configuration as defined in clause 5.1.2.1. The Range indicates the minimum distance that the QoS parameters need to be fulfilled. The Range parameter is passed to AS layer together with the QoS parameters for dynamic control.<br>- NR based PC5 supports three communication modes, i.e. broadcast, groupcast, and unicast. The QoS handling of these different modes are described in clauses 5.4.1.2 to 5.4.1.4.<br>- The UE may handle traffic using broadcast, groupcast, and unicast mode communication by taking all their priorities, e.g. indicated by PQIs, into account as described in clause 5.4.3.3.<br>- For broadcast and groupcast modes of V2X communication over NR based PC5, standardized PQI values are applied by the UE, as there is no signalling over PC5 reference point for these cases.<br>- When network scheduled operation mode is used, the UE-PC5-AMBR for NR based PC5 applies to all types of communication modes, and is used by NG-RAN for capping the UE's NR based PC5 transmission in the resources management. The UE-PC5-<br>AMBR shall be set to the sum of the aggregate maximum bit rate of all types of communicatio n (i.e. unicast, groupcast and broadcast modes) over PC5 reference point. |

[Table 20]

| |
|---|
| 5.4.1.1.2 Deriving PC5 QoS parameters and assigning PFI for PC5 QoS Flow<br>The following description applies to for both network scheduled operation mode and UE autonomous resources selection mode.<br>When a service data packet or request from the V2X application layer is received, the UE determines if there is any existing PC5 QoS Flow matching the service data packet or request, i.e. based on the PC5 QoS Rules for the existing PC5 QoS Flow(s).<br>If there is no PC5 QoS Flow matching the service data packet or request, the UE derives PC5 QoS parameters defined in clause 5.4.2 as below:<br>- If the application layer provides the V2X Application Requirements for the V2X service type (e.g. priority requirement, reliability requirement, delay requirement, range requirement), the V2X layer determines the PC5 QoS parameters based on the V2X Application Requirements;<br>- Otherwise, the V2X layer determines the PC5 QoS parameters based on the mapping of the V2X service type to PC5 QoS parameters defined in clause 5.1.2.1.<br>NOTE 1: Details of V2X Application Requirements for the V2X service type is up to implementation and out of scope of this specification. |

(continued)

| |
|---|
| After deriving the PC5 QoS parameters, the UE performs the following:<br>- If there is no existing PC5 QoS Flow that fulfils the derived PC5 QoS parameters:<br>- The UE creates a new PC5 QoS Flow for the derived PC5 QoS parameters; and<br>- The UE then assigns a PFI and derives PC5 QoS Rule for this PC5 QoS Flow.<br>- Otherwise, the UE updates the PC5 Packet Filter Set in the PC5 QoS Rule for such PC5 QoS Flow.<br>NOTE 2: It is expected that the application layer is capable of differentiating traffic from different V2X services that is transported within the same PC5 QoS Flow.<br>For V2X communication over NR PC5 reference point, the PC5 QoS Flow is the finest granularity of QoS differentiation in the same destination identified by Destination Layer-2 ID. User Plane traffic with the same PFI receives the same traffic forwarding treatment (e.g. scheduling, admission threshold). The PFI is unique within a same destination. |

[Table 21]

| |
|---|
| 5.4.1.1.3 Handling of PC5 QoS Flows based on PC5 QoS Rules<br>For each communication mode (e.g. broadcast, groupcast, unicast), the UE maintains the PC5 QoS Context and PC5 QoS Rule(s) for each PC5 QoS Flow identified by a PC5 QoS Flow Identifier (PFI) per destination identified by Destination Layer-2 ID.<br>The following information is maintained in the V2X layer of the UE:<br>- A PC5 QoS Context includes the following information:<br>- PFI;<br>- PC5 QoS parameters (i.e. PQI and conditionally other parameters such as MFBR/GFBR, Range, etc.) as defined in clause 5.4.2; and<br>- the V2X service type(s).<br>- One or more PC5 QoS Rule(s). Each PC5 QoS Rule contains the following information:<br>- PFI;<br>- a PC5 Packet Filter Set as defined in clause 5.4.1.1.4; and<br>- a precedence value. The precedence value determines the order in which the PC5 QoS Rules are evaluated. The PC5 QoS Rule with lower precedence value is evaluated before those with the higher precedence values.<br>NOTE: How to set the precedence value is up to UE implementation.<br>When the UE assigns a new PFI for V2X service type, the UE stores it with the corresponding PC5 QoS Context and PC5 QoS Rule(s) for the destination. When the UE<br>releases the PFI, the UE removes the corresponding PC5 QoS Context and PC5 QoS Rule(s) for the destination.<br>For unicast, the Unicast Link Profile defined in clause 5.2.1.4 contains additional information mapped from PFI for unicast operation.<br>The V2X layer provides information for PC5 QoS operations per destination (e.g. identified by Destination Layer-2 ID) to AS layer for Per-flow QoS model operations as below:<br>1) To add a new PC5 QoS Flow or to modify any existing PC5 QoS Flow, the V2X layer provides the following information for the PC5 QoS Flow to AS layer.<br>- the PFI;<br>- the corresponding PC5 QoS parameters; and<br>- source/destination Layer-2 IDs for broadcast and groupcast mode communication, or the PC5 Link Identifier for unicast.<br>2) To remove any existing PC5 QoS Flow, the V2X layer provides the following information for the PC5 QoS Flow to AS layer.<br>- the PFI; and<br>- source/destination Layer-2 IDs for broadcast and groupcast mode communication, or the PC5 Link Identifier for unicast.<br>In addition, the V2X layer also provides the communication mode (e.g. broadcast, groupcast, unicast) and radio frequencies to the AS layer for the PC5 operation. The radio frequencies are determined based on the V2X service type. The V2X layer ensures that V2X service types associated with different radio frequencies are classified into distinct PC5 QoS Flows.<br>Figure 5.4.1.1.3-1 illustrated an example of the classification and marking of user plane traffic using the PC5 QoS Rules, and the mapping of PC5 QoS Flows to radio resources at access stratum layer. |

(continued)

| |
|---|
| As illustrated in Figure 5.4.1.1.3-1, for a given pair of source and destination Layer-2 IDs, there can be multiple radio bearers, each corresponding to a different PC5 QoS level. Th e AS layer can determine the mapping of multiple PC5 QoS Flows to the same radio bearer ba sed on the information provided. For broadcast and groupcast mode communication, the L2 lin k goes to all UEs in proximity identified by the destination Layer-2 ID. |

Table 22 below shows a description related to FIG. 21 regarding Architecture and Protocol Stack of Layer-2 Relay. FIG. 21(a) illustrates a user plane protocol stack for an L2 UE-to-UE relay, and FIG. 21(b) illustrates a control plane protocol stack for the L2 UE-to-UE relay.

[Table 22]

| |
|---|
| 5.5 Layer-2 Relay<br>5.5.1 Architecture and Protocol Stack<br>For L2 UE-to-UE Relay architecture, the protocol stacks are similar to L2 UE-to-Network Relay other than the fact that the termination points are two Remote UEs. The protocol stacks for the user plane and control plane of L2 UE-to-UE Relay architecture are described in Figure 5.5.1-1 and Figure 5.5.1-2.<br>An adaptation layer is supported over the second PC5 link (i.e. the PC5 link between Relay UE and Destination UE) for L2 UE-to-UE Relay. For L2 UE-to-UE Relay, the adaptation layer is put over RLC sublayer for both CP and UP over the second PC5 link. The sidelink SDAP/PDCP and RRC are terminated between two Remote UEs, while RLC, MAC and PHY are terminated in each PC5 link.<br>For the first hop of L2 UE-to-UE Relay,<br>- The N:1 mapping is supported by first hop PC5 adaptation layer between Remote UE SL Radio Bearers and first hop PC5 RLC channels for relaying.<br>- The adaptation layer over first PC5 hop between Source Remote UE and Relay UE supports to identify traffic destined to different Destination Remote UEs.<br>For the second hop of L2 UE-to-UE Relay,<br>- The second hop PC5 adaptation layer can be used to support bearer mapping between the ingress RLC channels over first PC5 hop and egress RLC channels over second PC5 hop at Relay UE.<br>- PC5 Adaptation layer supports the N:1 bearer mapping between multiple ingress PC5 RLC channels over first PC5 hop and one egress PC5 RLC channel over second PC5 hop and supports the Remote UE identification function.<br>For L2 UE-to-UE Relay,<br>- The identity information of Remote UE end-to-end Radio Bearer is included in the adaptation layer in first and second PC5 hop.<br>-<br>In addition, the identity information of Source Remote UE and/or the identity informat ion of Destination Remote UE are candidate information to be included in the adaptation layer, which are to be decided in WI phase. |

In the following description, a first remote UE is a UE-to-UE (U2U) remote UE, which may also be referred to as a source remote UE, and a second remote UE is a peer U2U remote UE, which may also be referred to as a target remote UE.

In a user equipment (UE)-to-UE relay according to an embodiment, the relay UE may establish a first PC5 connection with a first remote UE (S2201 of FIG. 22). The relay UE may establish a second PC5 connection with the second remote UE (S2202). The relay UE may set split QoS related to the first PC5 connection and the second PC5 connection.

Here, the relay UE may report information identifying the first remote UE and information identifying the second remote UE, along with split QoS related to the second PC5 connection, to a serving BS of the relay UE.

The reporting may be performed via sidelinkUEInformation (SUI).

The relay UE may be in an RRC connected state. Alternatively, the relay UE may be a Mode 1 UE. That is, if the relay UE is RRC_CONNECTED (and/or in mode-1 operation), the relay UE may perform QoS split and local ID allocation and report this to the gNB. When the relay UE reports a split QoS value to its serving BS, the relay UE reports the split QoS value (e.g., PQI) value to its serving BS while reporting each source/target remote UE as a destination address. This is to enable the serving BS of the relay UE to efficiently set resource allocation for messages transmitted from the relay UE to the source/target remote UE.

The split QoS may be used for resource allocation for the first remote UE or the second remote UE of the BS.

The method may further include allocating a local ID for the first remote UE by the relay UE and allocating a local ID for the second remote UE by the relay UE.

The first PC5 connection and the second PC5 connection are related to establishing an end-to-end PC5 connection between the first remote UE and the second remote UE. Information of the split QoS may be related to one of a plurality of end-to-end QoSs between the first remote UE and the second remote UE.

The relay UE may transmit a split QoS related to the first PC5 connection to the first remote UE. The split QoS related to the first PC5 connection may be reported to the BS by the first remote UE. That is, after the first remote UE receives split quality of service (QoS) information from the relay UE, the first remote UE may report the split QoS information received from the relay UE and the end-to-end QoS related to the split QoS information to the serving BS of the first remote UE. The reporting may be performed via sidelinkUEInformation (SUI). The first remote UE may be a Mode 1 (resource allocation mode 1) UE.

The end-to-end QoS may be QoS between the first remote UE and the second remote UE. The end-to-end QoS information may be used to establish a data radio bearer (DRB) between the first remote UE and the second remote UE. The end-to-end QoS may be determined by a higher layer of the first remote UE.

The split QoS may be a QoS between the first remote UE and the relay UE and may be determined by the relay UE. Information of the split QoS may be related to one of a plurality of end-to-end QoSs between the first remote UE and the second remote UE. The split QoS may be used for resource selection of the first remote UE.

Without the configuration of the present disclosure described above, the Bs may not properly establish a first hop for connection with the first remote UE and the relay UE and an end-to-end DRB with the second remote UE. In more detail, as described above, end-to-end QoS information is used for DRB settings (i.e., end-to-end DRB settings) between the first remote UE and the second remote UE, and the split QoS is determined by the relay UE. Therefore, for the serving gNB of the first remote UE to configure the first-hop for connection with the first remote UE and the relay UE and the end-to-end DRB with the second remote UE, the first remote UE needs to report to the BS the split QoS information received from the relay UE and the end-to-end QoS related to the split QoS information.

The embodiment of the present disclosure described above may be performed in a process of establishing a connection and configuring a bearer between the first remote UE and the second remote UE. At least one bearer may be established between the first remote UE and the relay UE, and between the relay UE and the second remote UE. FIG. 23 illustrates an example of a bearer mapping relationship applicable to an embodiment of the present disclosure. FIG. 23(a) and FIG. 23(b) illustrates a case in which multiple bearers of the first-hop are multiplexed and transmitted over a second-hop through one bearer and a case in which one bearer of the first-hop is demultiplexed over the second-hop and transmitted through multiple bearers. This multiplexing may be possible when the relay UE knows the SL bearer mapping rules (and/or RLC channel mapping rules) of the first-hop and second-hop and the end-to-end bearer to which each bearer (and/or RLC channel ID) belongs. (c) of FIG. 23 and (d) of FIG. 23 illustrate a case in which multiple bearers formed from different remote UEs are 1:N multiplexed over the first-hop and second-hop when multiple remote UEs exist. In the case of FIGS. 23(a), (b), (c), and (d), a local ID may be required in an adaptation layer for identification of the first remote UE and the second remote UE. The local ID may be a value representing the first remote UE and the second remote UE, and may be a value expressed with fewer bits than an L2 ID to reduce overhead. FIG. 23(e) shows a case in which the first-hop and second-hop bearers are mapped to 1:1 bearers without 1:N bearer mapping. In this case, a local ID may not be required, and U2U bearer settings between the first remote UE and the second remote UE may be completed simply by knowing the SL bearer (and/or RLC channel ID/logical channel ID) mapping rule between the first-hop and the second-hop.

FIG. 24 illustrates a procedure for establishing an SL bearer between a relay UE and a second remote UE. It is assumed that a discovery procedure for the first remote UE to find the relay UE has been completed prior to the procedure of FIG. 24.

Referring to FIG. 24, in operations S2401a to S2402b, the first remote UE that determines the (target) relay UE through the relay discovery process establishes an SL connection with the selected relay UE. A relay UE that has completed an SL connection with the first remote UE for the purpose of U2U relay establishes an SL connection with the second remote UE. As in FIG. 24, each SL connection may be established, but as in FIG. 25, the SL connection (first-hop connection) between the first remote UE and the relay UE may be dependent on the SL connection (second-hop connection) between the relay UE and the second remote UE. For example, when the first remote UE transmits an RRCReconfigurationSidelink message to the relay UE (S2501), this may trigger the relay UE to transmit an RRCReconfigurationSidelink message to the second remote UE (S2502). When the relay UE receives an RRCReconfigurationCompleteSidelink message from the second remote UE (S2503), this may trigger the relay UE to transmit an RRCReconfigurationCompleteSidelink message to the first remote UE (S2504). If the second remote UE transmits an RRCReconfigurationFailureSidelink message in response to the RRCReconfigurationSidelink message transmitted by the relay UE, the relay UE may also transmit an RRCReconfigurationFailureSidelink message to the first remote UE with this as a cause value (i.e., with the cause value indicating that the SL connection between the relay UE and the second remote UE has failed).

In operation S2410, a local ID is assigned by the relay UE.

In operations S2403a and S2403b, when the SL connection is completed between the first remote UE and the relay UE, the relay UE may assign local IDs to the first remote UE and the second remote UE. This may be accomplished through a PC5-RRC message, and the local ID information of the first remote UE and the local ID information of the second remote UE may be transmitted to the first remote UE (S2403a). The local ID information of the first remote UE and the local ID information of the second remote UE may be transmitted to the second remote UE (S2403b). Then, the messages transmitted by the first remote UE and the second remote UE may include an adaptation layer header and may be transmitted by including (source, target) local ID in this header. The corresponding process means a process performed at any time when the SL connection between the first remote UE and the relay UE and the SL connection between the relay UE and the second remote UE are completed, and may not mean that the process needs to be located before S2404a in the order of settings. That is, S2403a and S2403b may be located anywhere after S2402b before the adaptation layer is set.

In operation S2404a, when the SL connection is completed between the first remote UE and the relay UE, and the SL connection is completed between the relay UE and the second remote UE, the first remote UE may transmit an RRCReconfigurationSidelink message to the second remote UE through the relay UE. This message enables end-to-end bearer establishment between the first remote UE and the second remote UE. Generally, the RRCReconfigurationSidelink message is transmitted via SL-SRB3, and in a U2U relay operation, the RRCReconfigurationSidelink transmitted from the first remote UE to the second remote UE via the relay UE is also expected to be transmitted via SL-SRB3. However, when using a typical SL-SRB3, the relay UE may not know that the message transmitted by the first remote UE to the relay UE is intended for transmission to the second remote UE, and thus the message may be transmitted using a specified configuration SL-RLC3. In this case, the use of the newly defined SL-RLC3 may be limited to cases in which a local ID is not received from the relay UE. When a local ID is allocated from a relay UE, the RRCReconfigurationSidelink message that the first remote UE transmits to the second remote UE through the relay UE is transmitted with the (source/second remote UE) local ID attached to the adaptation layer header and indicates whether the message is SRB3, and thus the relay UE may transmit the message to the second remote UE. In this case, when the assigned local ID does not exist, the SRAP header of the initial RRCReconfigurationSidelink (and/or RRCReconfigurationCompleteSidelink) message transmitted between the first remote UE and the second remote UE may exceptionally include the L2 SRC/DST ID. When the first remote UE is in RRC CONNECTED state (and/or mode1) operation, the first remote UE may transmit QoS related information (e.g., sl-QoS-FlowIdentity, and sl-QoS-Profile (see 3GPP TS38.331)) to its serving BS, destined for the second remote UE, via SUI/AUI message.

In operation S2405, the first remote UE may transmit QoS related information to the relay UE via a PC5-RRC message. In detail, when the end-to-end bearer setup between the first remote UE and the second remote UE is completed, work may be required to set the QoS quality between the first remote UE and the relay UE and the QoS quality between the relay UE and the second remote UE to satisfy the end-to-end QoS requirement of data that the first remote UE wishes to transmit. Information about the overall required end-to-end QoS quality of the data to be transmitted is known to the first remote UE, but the link quality of the first-hop and second-hop is known to the relay UE. In the present disclosure, it is assumed that a relay UE performs QoS split. When the relay QoS split, the first remote UE may transmit QoS related information to the relay UE via a PC5-RRC message. For example, QoS profile information (and/or SL resource type, SL priority level, SL packet delay budget, SL packet error rate, SL averaging window, and SL max data burst volume), PQFI, traffic pattern information, and the like are transmitted to the relay UE. The relay UE that receives this may split the QoS of the first-hop and the second-hop by using the SL-RSRP (and/or SD-RSRP/CBR/CQI/RSRQ/RSSI, and the like) of the first-hop and the SL-RSRP (and/or SD-RSRP/CBR/CQI/RSRQ/RSSI, and the like) of the second-hop.

Alternatively, the first remote UE may directly inform the relay UE of the end-to-end bearer configuration configured by the second remote UE. This is because the end-to-end bearer configuration includes the index (ID) of the bearer and the PQI value to be transmitted through the bearer. If the relay UE is an RRC_CONNECTED (and/or mode-1) UE, the relay UE may report (some/all of the above-described) QoS-related information received from the first remote UE to its serving BS. In this case, the relay UE may transmit an indication that this is information to request QoS split of U2U operation. The relay UE may also report the (L2/local) ID of the first remote UE and the (L2/local) ID of the second remote UE together with the QoS information received from the first remote UE.

In operation S2420, QoS split is performed by the relay UE.

In operations S2406a and b, the relay UE may transmit the split QoS value to the first remote UE and the second remote UE via a PC5-RRC message. The QoS value transmitted in this case, is a value split by the relay UE, and thus it may be be a non-standard QoS value (i.e., a value set by the relay UE that is not specified in the standard document). Upon receiving split QoS information from the relay UE, the first remote UE may reset the SL configuration of the first-hop to match the split QoS.

The reason why the relay UE also transmits split QoS information to the second remote UE is to enable the second remote UE to determine whether the currently set SL configuration is to be applied when transmission data generated by the second remote UE is generated. To this end, the relay UE may need to forward all QoS-related information received from the first remote UE to the second remote UE. The second remote UE knows how the relay UE performed QoS split (second-hop) to match the overall end-to-end QoS quality, and if the QoS quality of data to be transmitted from the second remote UE to the first remote UE via the relay UE is the same as the QoS quality of the existing first remote UE, the second remote UE may transmit the data by using a preset bearer. Alternatively, the value transmitted in this case may be simple PQI information.

A packet relayed in U2U relay operation does not pass through the SDAP layer of the relay UE, and thus it may be difficult to utilize QoS-related information in the relay UE (i.e., QoS split is possible, but QoS and bearer mapping are performed in the SDAP layer, and thus the information may not be used for U2U relay operation in the relay UE). Accordingly, if the relay UE transmits the QoS-related information (S2405) received from the first remote UE and the QoS-related information (S2406a) split by the relay UE to the second remote UE, the SDAP layer of the second remote UE may set the SL bearer of the second hop (i.e., in S2408a, b, the structure may be such that the second remote UE sets the SL of the second hop, rather than the relay UE setting the SL of the second hop). The value set in this case is the value set by the second remote UE to the relay UE, and may include a mapping relationship between the end-to-end bearer and the RLC_ID (and/or logical channel ID).

In operation S2407a, the first remote UE transmits an RRCReconfigurationSidelink message to the relay UE. The RRCReconfigurationSidelink message transmitted by the first remote UE to the relay UE includes not only the SL configuration of the first hop, but also end-to-end bearer information between the first remote UE and the second remote UE. For example, the RRCReconfigurationSidelink message that the first remote UE transmits to the relay UE may include mapping information about which end-to-end bearer the configured SL bearer belongs to. Alternatively, it may include mapping information between the end-to-end bearer and the SL RLC channel. Alternatively, it may include mapping information between the end-to-end bearer and the logical channel ID. (Alternatively) the first remote UE may set the SL configuration of the first-hop while also setting the SL configuration and RLC channel mapping information of the second-hop to the relay UE.

The relay UE that receives this uses the RLC channel mapping information (mapping the SL RLC (and/or logical) channel of the first-hop and the SL RLC (and/or logical) channel of the second-hop) to configure its own adaptation layer (bearer mapping rule/RLC channel mapping rule), and may configure information about the SL configuration of the second-hop to the second remote UE through an RRCReconfigurationSidelink message (S2408a). The configuration for the second-hop may also include the SL bearer and end-to-end bearer mapping information for the second-hop, like the configuration for the first-hop. Alternatively, it may include mapping information of end-to-end bearer and SL RLC channel (and/or logical channel ID).

In this case, the SL configuration of the first-hop and second-hop may proceed in the same order as in FIG. 26. That is, the RRCReconfigurationSidelink message transmitted by the first remote UE to the relay UE may include the SL RRC configuration information of the second hop, and the relay UE may transmit only the settings for the second hop from the RRCReconfigurationSidelink message received from the first remote UE to the second remote UE as an RRCReconfigurationSidelink message. Upon receiving the RRCReconfigurationCompleteSidelink message from the second remote UE, the relay UE may also transmit a complete message (and/or RRCReconfigurationCompleteSidelink) for SL settings over the first-hop.

The SL configuration of the first-hop and second-hop may proceed in the same order as in FIG. 27.

The relay UE knows the end-to-end bearer information through S2405 without transmitting the split QoS value to the first remote UE and the second remote UE (i.e., there is no operation S2406a of FIG. 24 or operation S2406 of FIG. 25), and thus the relay UE may also reset the SL RRC configuration of the first-hop and the second-hop. The relay UE has reconfigured the SLs of both hops to match the entire end-to-end bearer, and thus it may configure the adaptation layer setting information itself, such as the RLC channel (and/or logical channel ID) mapping of the first-hop and second-hop, and the bearer (and/or RLC/logical channel ID) mapping information of the first-hop and second-hop according to the end-to-end bearer ID. That is, as such, the adaptation layer may be set by the relay UE itself. In this case, each of the first remote UE and the second remote UE may also set an adaptation layer, and thus, from now on, packets transmitted need to be transmitted with an adaptation layer header attached.

In operations S2408a and b, the relay UE may set the SL configuration of the second-hop based on the split QoS information. The information set in this case may include SL bearer information and SL bearer and end-to-end bearer mapping rule (and/or SL RLC channel and end-to-end bearer mapping rule).

(Or) when QoS is split, the split information is transmitted to the second remote UE, and unlike as shown in FIG. 24, the second remote UE may set the SL configuration of the second-hop. That is, the SDAP layer of the second remote UE may set the SL configuration of the second hop according to the split QoS information. The information set in this case may include SL bearer and end-to-end bearer mapping rule (and/or SL RLC channel and end-to-end bearer mapping rule).

When operations S2407a and b and S2408a and b are completed, the adaptation layer of the relay UE may be interpreted as having completed the settings. The relay UE may also know a mapping relationship between the SL RLC channel of the first hop and the SL RLC channel of the second hop through the mapping relationship between the end-to-end bearer and the SL RLC channel established over the first hop and the second hop.

A first remote UE (and/or a second remote UE) that has received a single-hop SL configuration set from a relay UE or a first remote UE (and/or a second remote UE) that has received split QoS information set from a relay UE may need to report the information to its serving BS. (This may only be the case when the first remote UE and/or the second remote UE are in RRC_CONNECTED/mode-1 operation). When reporting, a destination (L2) ID needs to be set to the relay UE and reported. This is because the split QoS information is information related to single-hop transmission.

The present disclosure proposes a procedure of, in an initial setting, the SL settings of the first-hop and the second-hop are set to arbitrary values (and/or only the SRB is set, or only the SRB and one DRB are set), and after the first remote UE and the second remote UE complete the end-to-end bearer settings through the relay UE, the relay UE performs QoS split, and after the QoS split is performed, the first-hop and the second-hop perform fine settings in the second settings considering the required QoS.

In relation to the above description, when the U2N relay operation and the U2U operation are performed within one UE, each SRAP entity exists for the U2N relay and U2U relay operations.

(Even if the SRAP header structure is the same, the SRAP entity is not shared)

It is obvious that in the above technology, the relay UE may be extended to include gNB, IAB-node, and the like. In the above description, remote UE 1 may be called a U2U remote UE, remote UE 2 may be called a peer U2U remote UE, and relay UE may be called a U2U relay UE.

Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

FIG. 28 illustrates a communication system 1 applied to the present disclosure.

Referring to FIG. 28, a communication system 1 applied to the present disclosure includes wireless devices, BSs, and a network. Herein, the wireless devices represent devices performing communication using RAT (e.g., 5G NR or LTE) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

FIG. 29 illustrates wireless devices applicable to the present disclosure.

Referring to FIG. 29, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 28.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

FIG. 30 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 30, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

FIG. 31 illustrates a vehicle applied to the present disclosure. The vehicle may be implemented as a transport means, an aerial vehicle, a ship, etc.

Referring to FIG. 31, a vehicle 100 may include a communication unit 110, a control unit 120, a memory unit 130, an I/O unit 140a, and a positioning unit 140b.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

FIG. 32 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 32, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

FIG. 33 illustrates a robot applied to the present disclosure. The robot may be categorized into an industrial robot, a medical robot, a household robot, a military robot, etc., according to a used purpose or field.

Referring to FIG. 33, a robot 100 may include a communication unit 110, a control unit 120, a memory unit 130, an I/O unit 140a, a sensor unit 140b, and a driving unit 140c.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

FIG. 34 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 34, an AI device 100 may include a communication unit 110, a control unit 120, a memory unit 130, an I/O unit 140a/140b, a learning processor unit 140c, and a sensor unit 140d.

The communication unit 110 may transmit and receive wired/radio signals (e.g., sensor information, user input, learning models, or control signals) to and from external devices such as other AI devices (e.g., 100x, 200, or 400 of FIG. 28) or an AI server (e.g., 400 of FIG. 28) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 28). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 28). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

## Industrial Applicability

The above-described embodiments of the present disclosure are applicable to various mobile communication systems.

## Claims

1. An operation method of a relay user equipment (UE) in a UE-to-UE relay in a wireless communication system, the operation method comprising:

    establishing a first PC5 connection with a first remote UE, by the relay UE;
    establishing a second PC5 connection with a second remote UE, by the relay UE; and
    setting split quality of service (QoS) related to the first PC5 connection and the second PC5 connection,
    wherein the relay UE reports information identifying the first remote UE and information identifying the second remote UE, along with split QoS related to the second PC5 connection, to a serving base station (BS) of the relay UE.

2. The operation method of claim 1, wherein the reporting is performed via sidelinkUEInformation (SUI).

3. The operation method of claim 1, wherein the relay UE is in an RRC connected state.

4. The operation method of claim 1, wherein the relay UE is a Mode 1 UE.

5. The operation method of claim 1, wherein the split QoS is used for resource allocation for the first remote UE or the second remote UE of the BS.

6. The operation method of claim 1, further comprising:

    allocating a local ID for the first remote UE, by the relay UE; and
    allocating a local ID for the second remote UE, by the relay UE.

7. The operation method of claim 1, wherein the first PC5 connection and the second PC5 connection are related to establishing an end-to-end PC5 connection between the first remote UE and the second remote UE.

8. The operation method of claim 1, wherein the relay UE transmits a split QoS related to the first PC5 connection to the first remote UE.

9. The operation method of claim 8, wherein the split QoS related to the first PC5 connection is reported to the BS by the first remote UE.

**10.** The operation method of claim 1, wherein information of the split QoS is related to one of a plurality of end-to-end QoSs between the first remote UE and the second remote UE.

**11.** A relay user equipment (UE) in a UE-to-UE relay in a wireless communication system, the relay UE comprising:

at least one processor; and
at least one computer memory operably connected to the at least one processor and storing instructions that, when executed, cause the at least one processor to perform operations,
wherein the operations include:

establishing a first PC5 connection with a first remote UE, by the relay UE;
establishing a second PC5 connection with a second remote UE, by the relay UE; and
setting split quality of service (QoS) related to the first PC5 connection and the second PC5 connection, and the relay UE reports information identifying the first remote UE and information identifying the second remote UE, along with split QoS related to the second PC5 connection, to a serving base station (BS) of the relay UE.

**12.** A non-volatile computer-readable storage medium storing at least one computer program comprising an instruction that, when executed by at least one processor, cause the at least one processor to perform operations for a relay user equipment (UE), the operations comprising:

establishing a first PC5 connection with a first remote UE, by the relay UE;
establishing a second PC5 connection with a second remote UE, by the relay UE; and
setting split quality of service (QoS) related to the first PC5 connection and the second PC5 connection, wherein the relay UE reports information identifying the first remote UE and information identifying the second remote UE, along with split QoS related to the second PC5 connection, to a serving base station (BS) of the relay UE.

FIG. 1

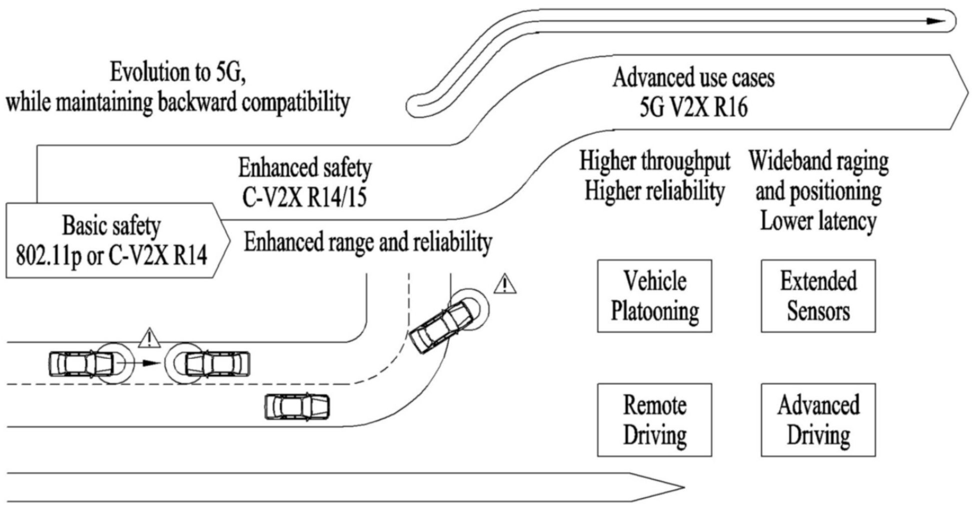
Evolution to 5G,
while maintaining backward compatibility
Advanced use cases
5G V2X R16
Enhanced safety
C-V2X R14/15
Higher throughput
Higher reliability
Wideband raging
and positioning
Lower latency
Basic safety
802.11p or C-V2X R14
Enhanced range and reliability
Vehicle
Platooning
Extended
Sensors
Remote
Driving
Advanced
Driving

FIG. 2

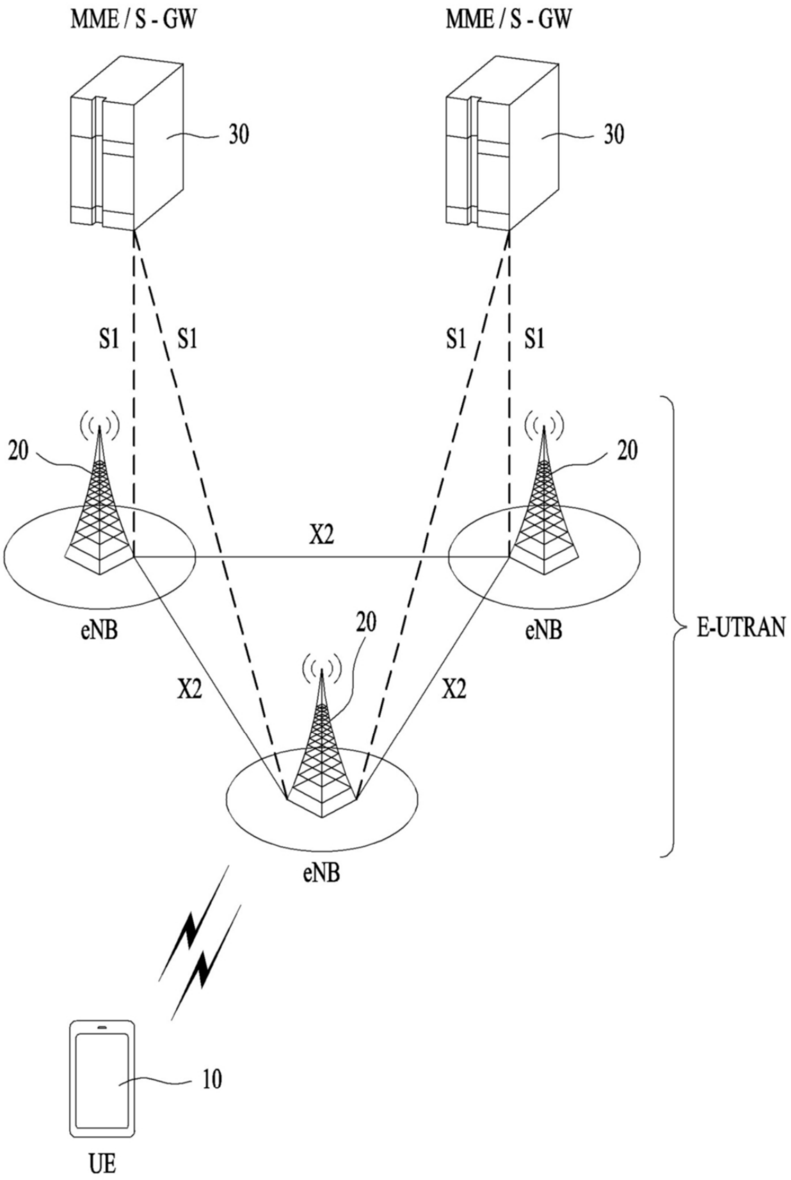
MME / S - GW
MME / S - GW
30
30
S1
S1
S1
S1
20
20
X2
eNB
eNB
E-UTRAN
20
X2
X2
eNB
10
UE

FIG. 3

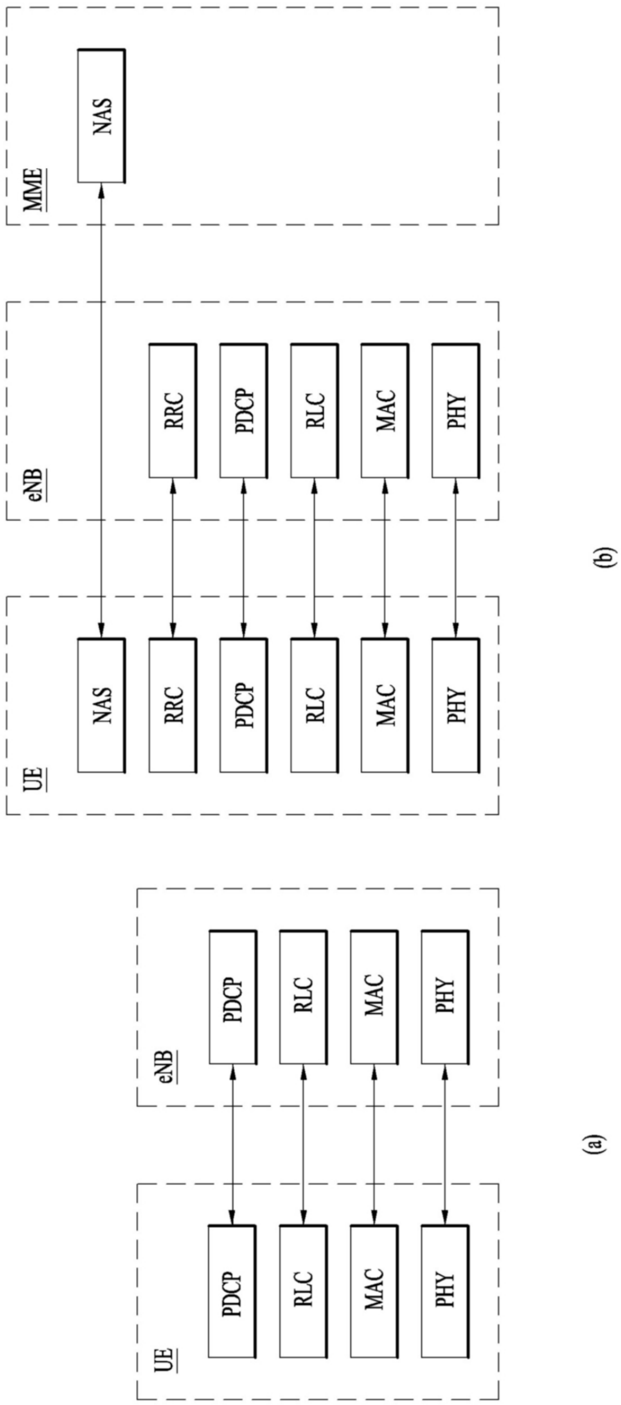
UE
PDCP
RLC
MAC
PHY
eNB
PDCP
RLC
MAC
PHY
(a)
UE
NAS
RRC
PDCP
RLC
MAC
PHY
eNB
RRC
PDCP
RLC
MAC
PHY
MME
NAS
(b)

FIG. 4

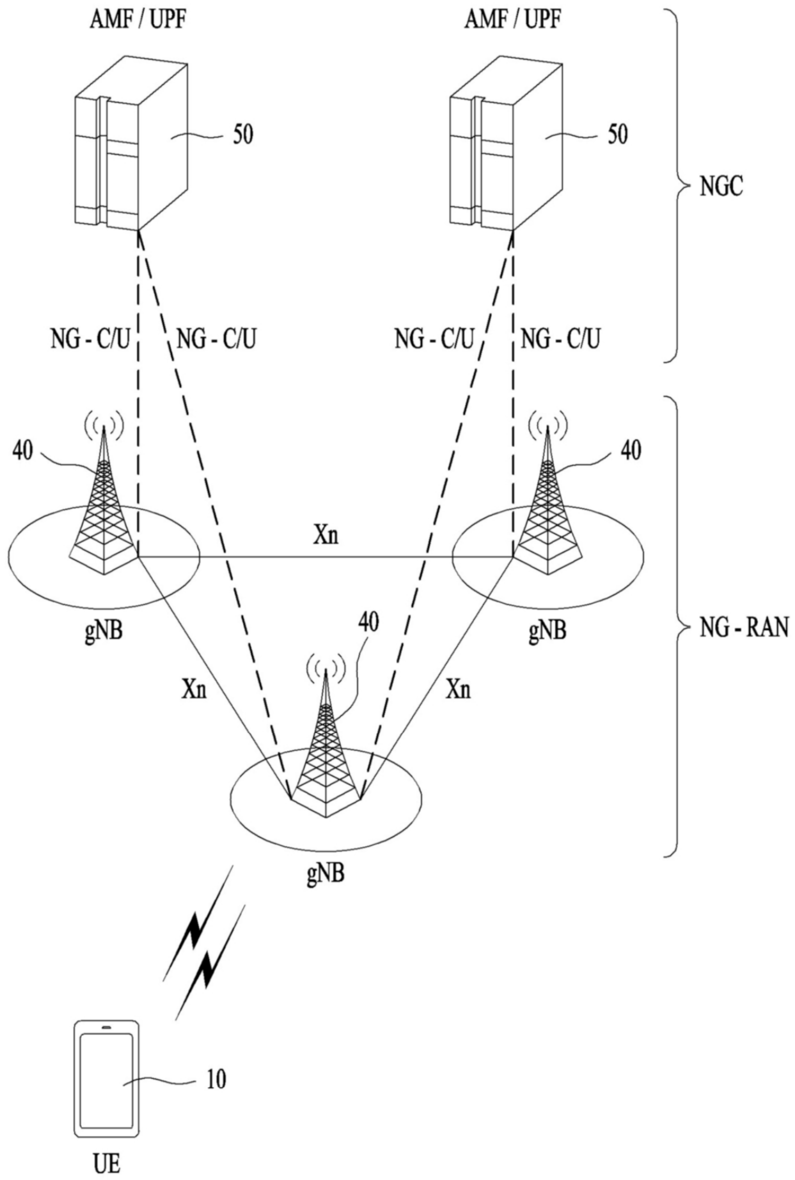
AMF / UPF
AMF / UPF
50
50
NGC
NG - C/U
NG - C/U
NG - C/U
NG - C/U
40
40
Xn
gNB
gNB
40
NG - RAN
Xn
Xn
gNB
10
UE

FIG. 5

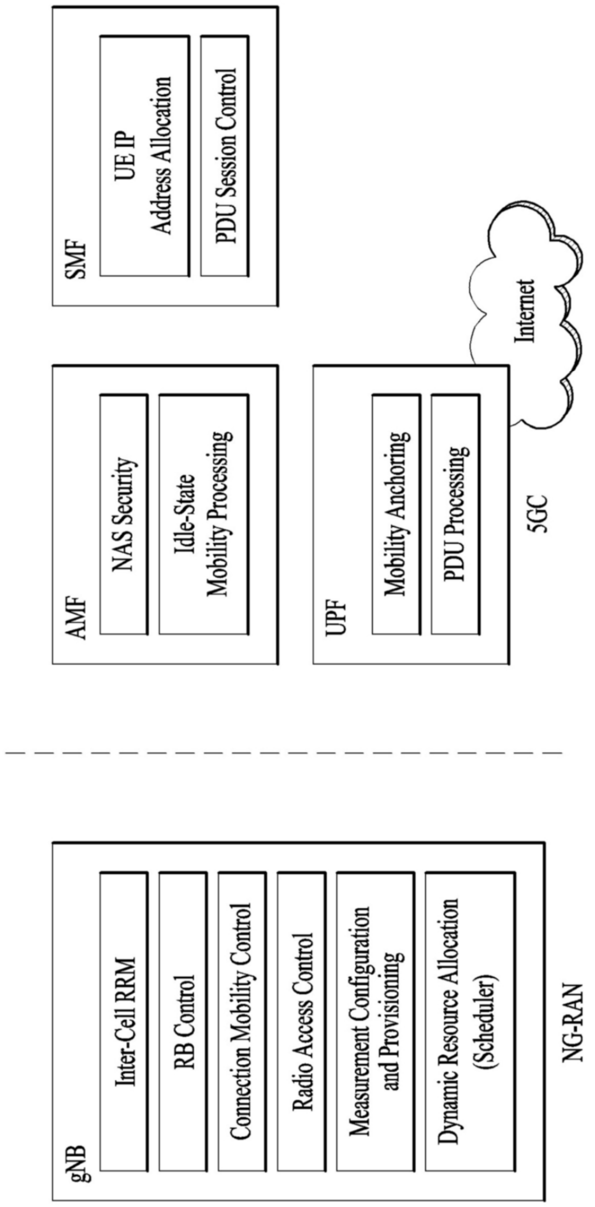
gNB
Inter-Cell RRM
RB Control
Connection Mobility Control
Radio Access Control
Measurement Configuration and Provisioning
Dynamic Resource Allocation (Scheduler)
NG-RAN
AMF
NAS Security
Idle-State Mobility Processing
SMF
UE IP Address Allocation
PDU Session Control
UPF
Mobility Anchoring
PDU Processing
5GC
Internet

FIG. 6

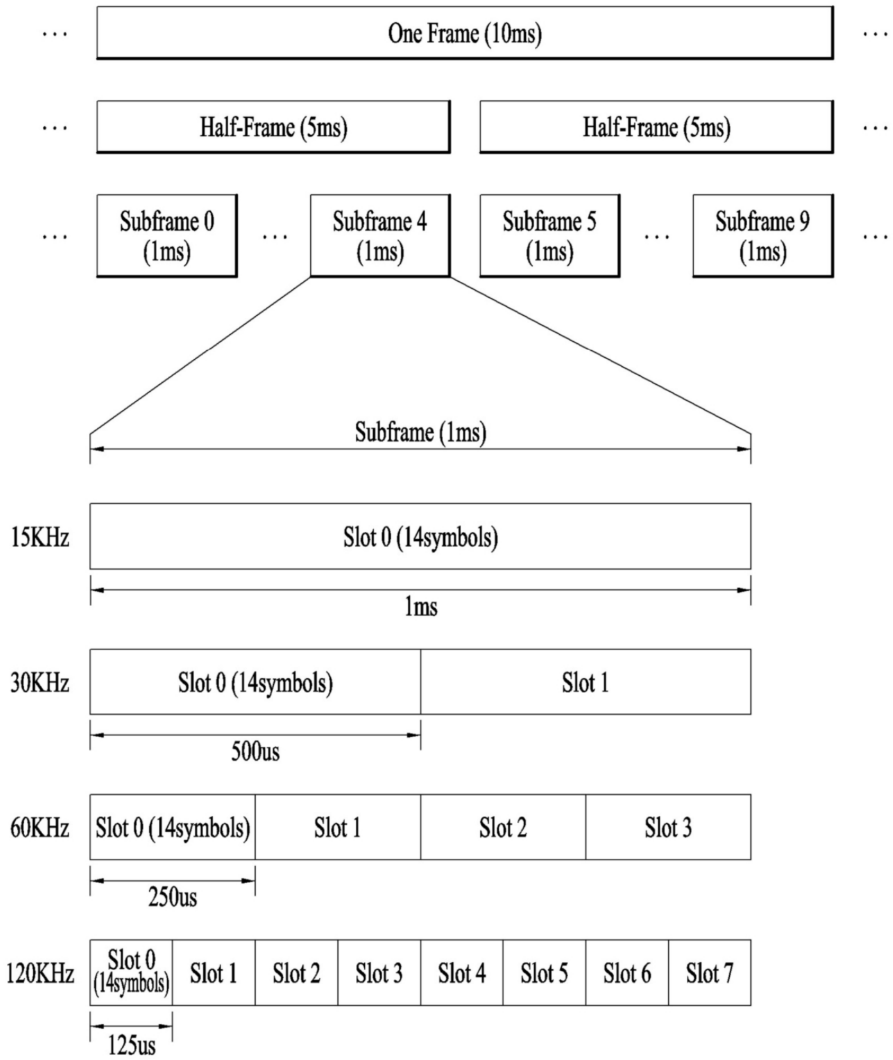
One Frame (10ms)
Half-Frame (5ms)
Half-Frame (5ms)
Subframe 0 (1ms)
Subframe 4 (1ms)
Subframe 5 (1ms)
Subframe 9 (1ms)
Subframe (1ms)
15KHz
Slot 0 (14symbols)
1ms
30KHz
Slot 0 (14symbols)
Slot 1
500us
60KHz
Slot 0 (14symbols)
Slot 1
Slot 2
Slot 3
250us
120KHz
Slot 0 (14symbols)
Slot 1
Slot 2
Slot 3
Slot 4
Slot 5
Slot 6
Slot 7
125us

FIG. 7

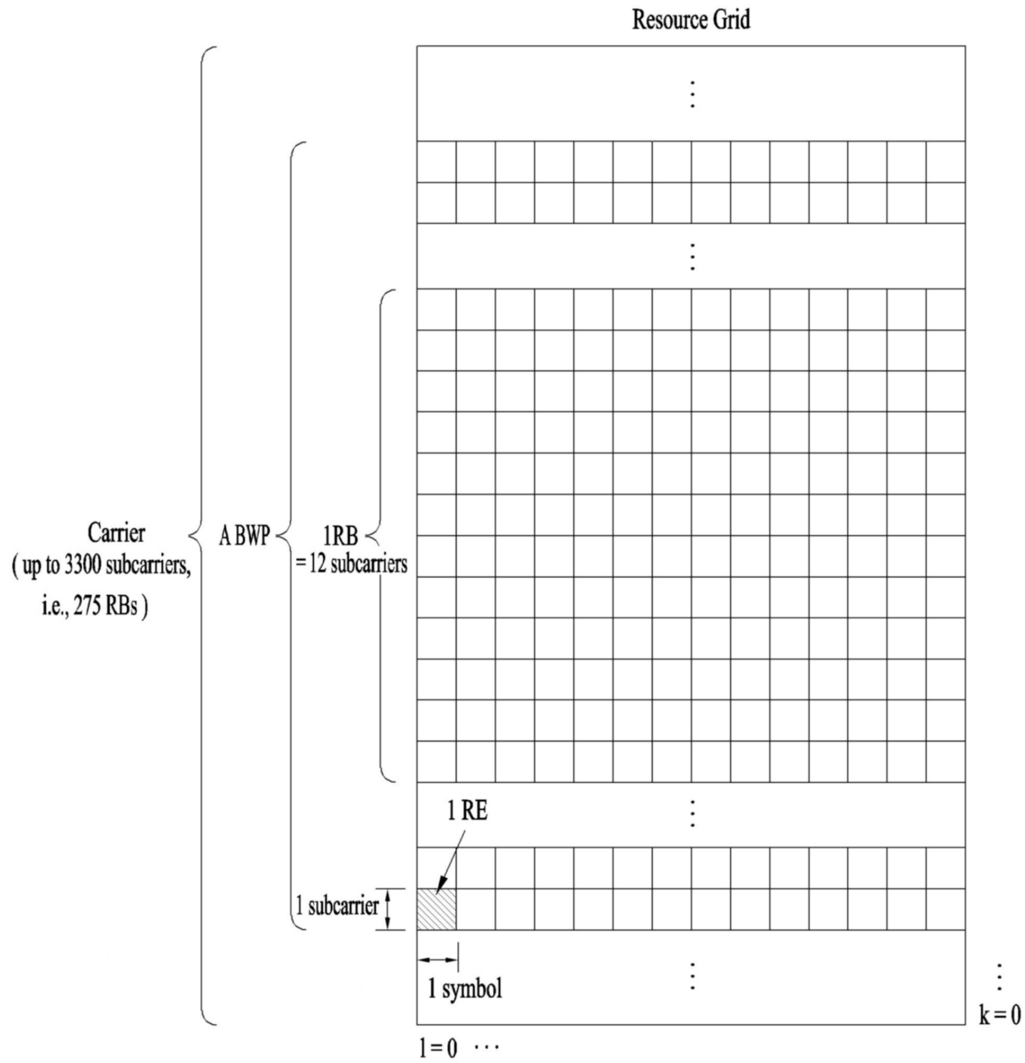

Resource Grid
Carrier
( up to 3300 subcarriers,
i.e., 275 RBs )
A BWP
1RB
= 12 subcarriers
1 RE
1 subcarrier
1 symbol
k = 0
l = 0 ···

FIG. 8

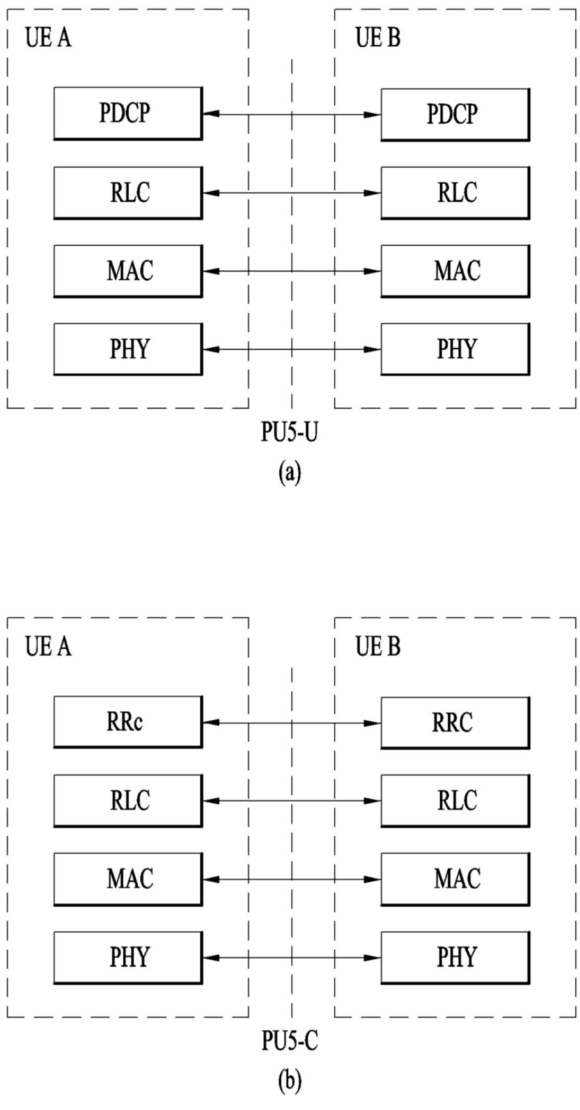
UE A
UE B
PDCP
PDCP
RLC
RLC
MAC
MAC
PHY
PHY
PU5-U
(a)
UE A
UE B
RRc
RRC
RLC
RLC
MAC
MAC
PHY
PHY
PU5-C
(b)

FIG. 9

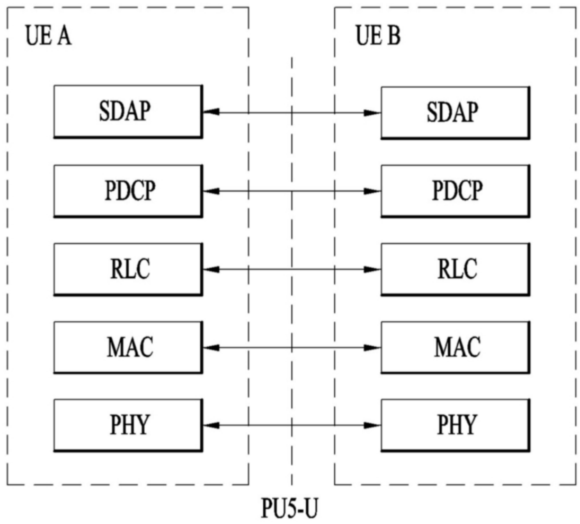
UE A
UE B
SDAP
SDAP
PDCP
PDCP
RLC
RLC
MAC
MAC
PHY
PHY
PU5-U

(a)

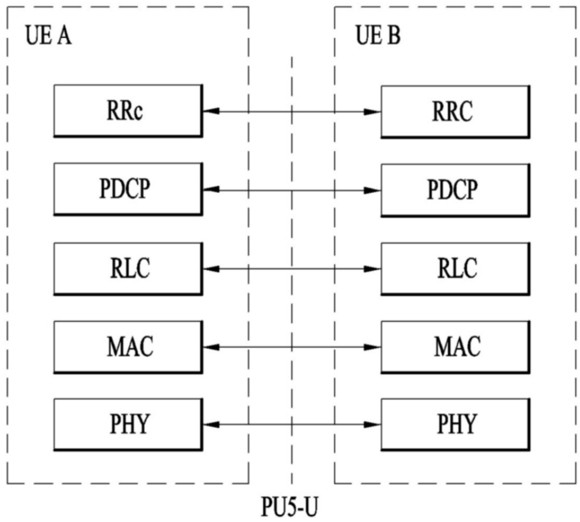
UE A
UE B
RRc
RRC
PDCP
PDCP
RLC
RLC
MAC
MAC
PHY
PHY
PU5-U

(b)

FIG. 10

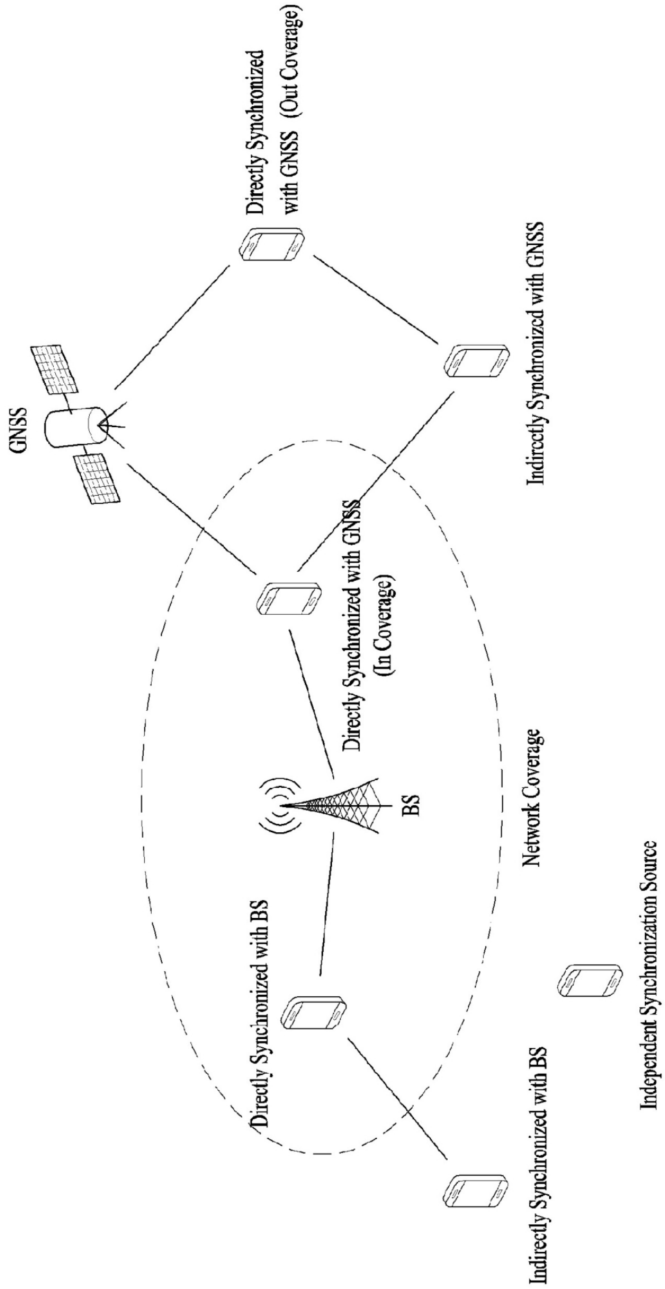

GNSS
Directly Synchronized with GNSS (Out Coverage)
Indirectly Synchronized with GNSS
Directly Synchronized with GNSS (In Coverage)
BS
Network Coverage
Directly Synchronized with BS
Indirectly Synchronized with BS
Independent Synchronization Source

FIG. 11

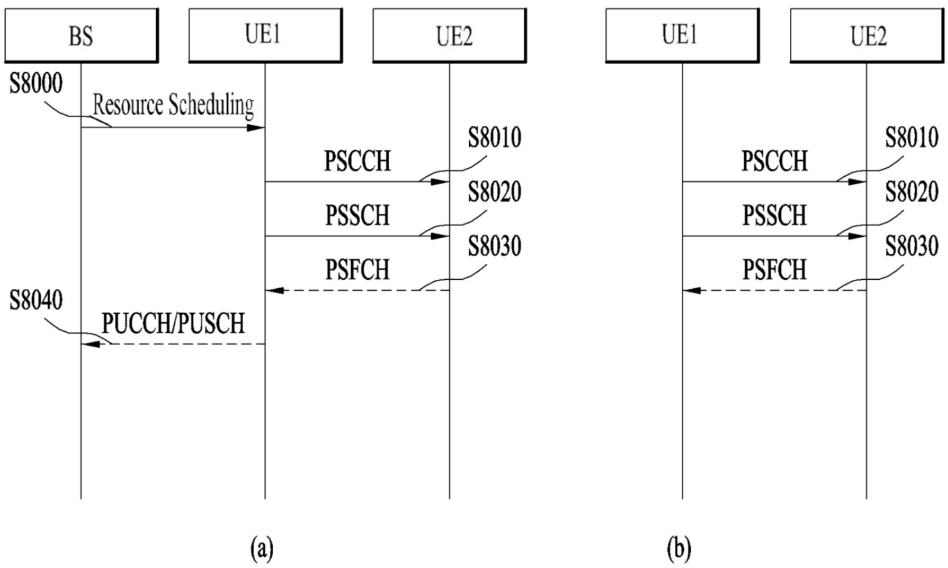
BS
UE1
UE2
S8000
Resource Scheduling
PSCCH
S8010
PSSCH
S8020
PSFCH
S8030
S8040
PUCCH/PUSCH
(a)
UE1
UE2
PSCCH
S8010
PSSCH
S8020
PSFCH
S8030
(b)

FIG. 12

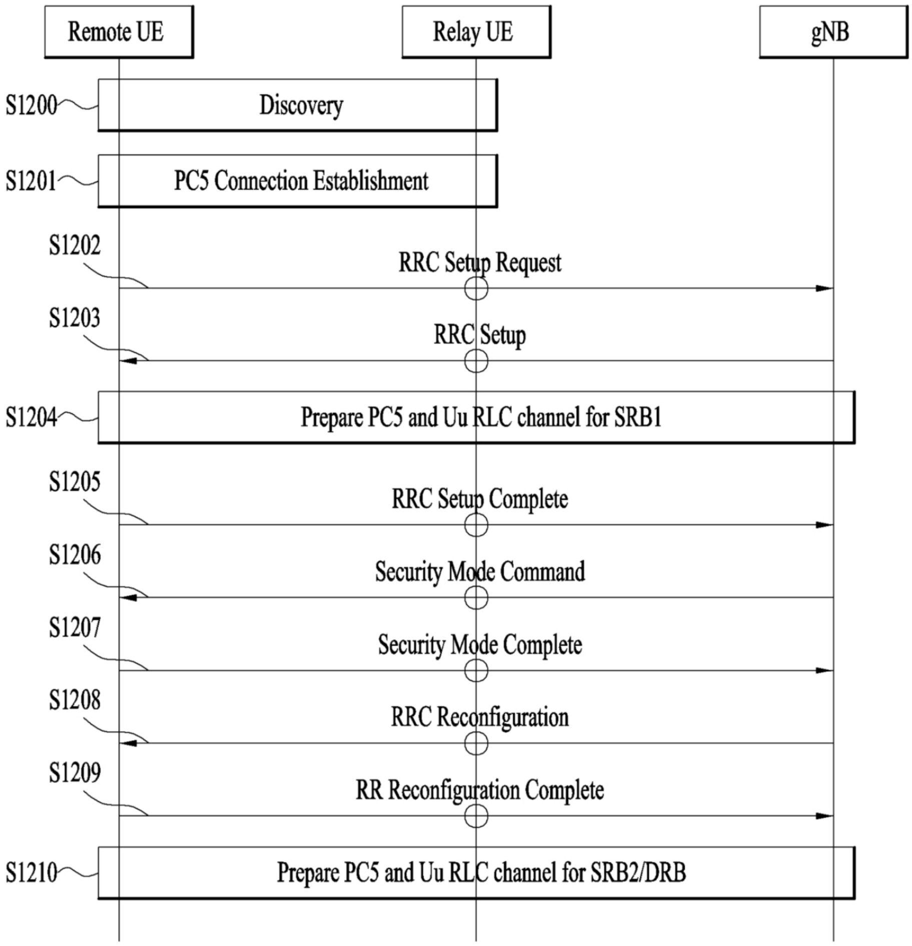
Remote UE
Relay UE
gNB
S1200
Discovery
S1201
PC5 Connection Establishment
S1202
RRC Setup Request
S1203
RRC Setup
S1204
Prepare PC5 and Uu RLC channel for SRB1
S1205
RRC Setup Complete
S1206
Security Mode Command
S1207
Security Mode Complete
S1208
RRC Reconfiguration
S1209
RR Reconfiguration Complete
S1210
Prepare PC5 and Uu RLC channel for SRB2/DRB

FIG. 13

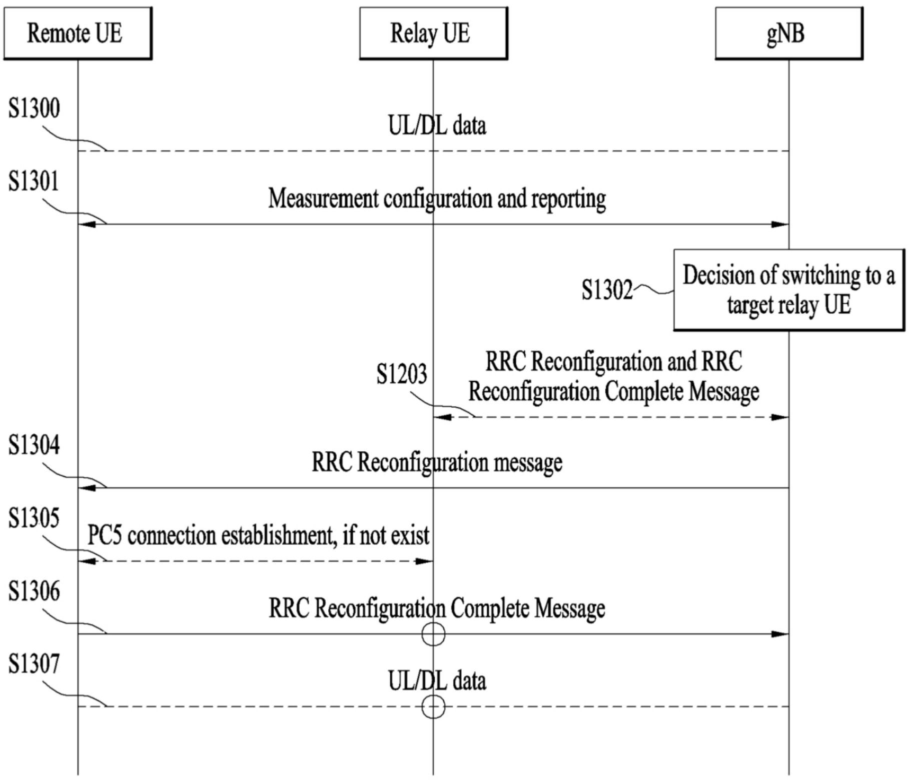
Remote UE
Relay UE
gNB
S1300
UL/DL data
S1301
Measurement configuration and reporting
S1302
Decision of switching to a target relay UE
S1203
RRC Reconfiguration and RRC Reconfiguration Complete Message
S1304
RRC Reconfiguration message
S1305
PC5 connection establishment, if not exist
S1306
RRC Reconfiguration Complete Message
S1307
UL/DL data

FIG. 14

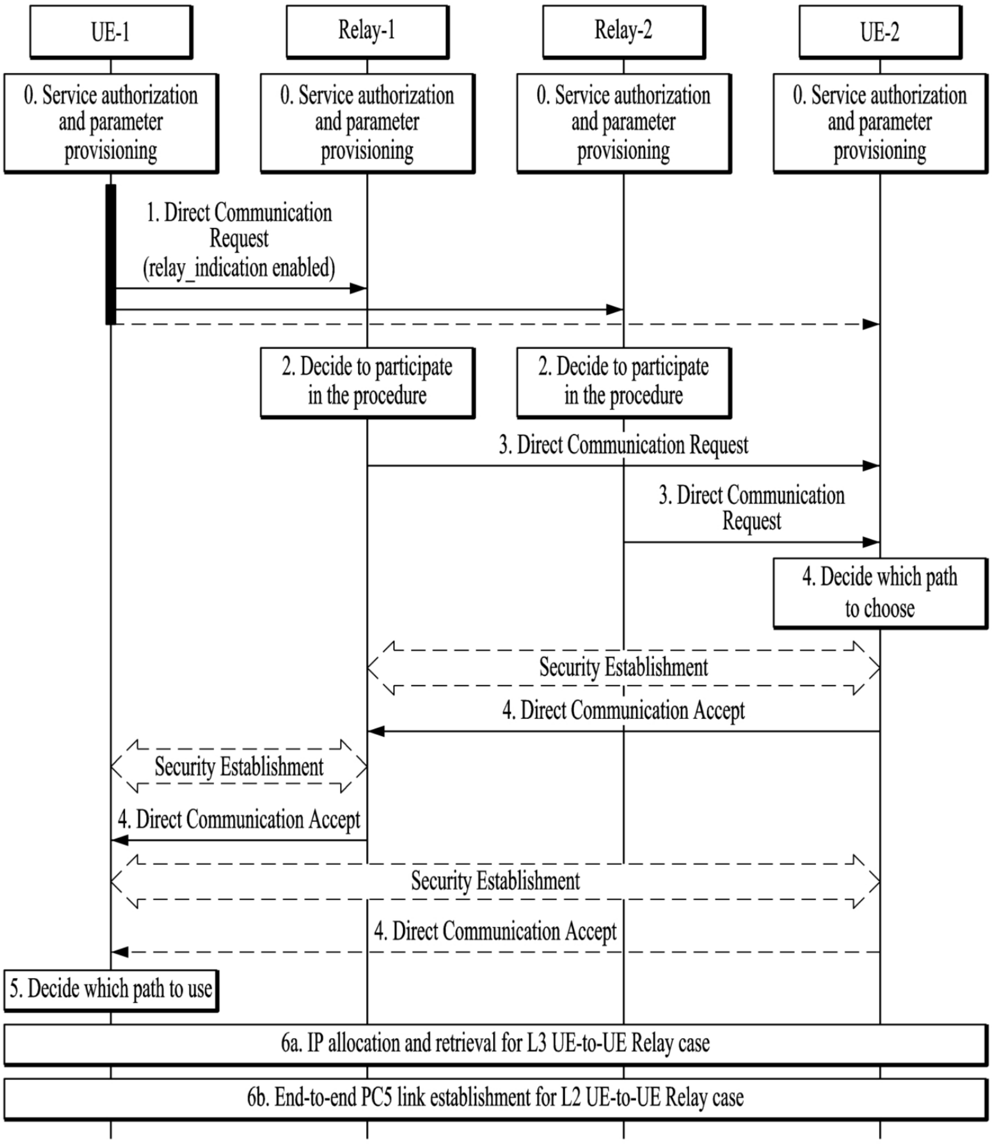
UE-1
Relay-1
Relay-2
UE-2
0. Service authorization and parameter provisioning
0. Service authorization and parameter provisioning
0. Service authorization and parameter provisioning
0. Service authorization and parameter provisioning
1. Direct Communication Request (relay_indication enabled)
2. Decide to participate in the procedure
2. Decide to participate in the procedure
3. Direct Communication Request
3. Direct Communication Request
4. Decide which path to choose
Security Establishment
4. Direct Communication Accept
Security Establishment
4. Direct Communication Accept
Security Establishment
4. Direct Communication Accept
5. Decide which path to use
6a. IP allocation and retrieval for L3 UE-to-UE Relay case
6b. End-to-end PC5 link establishment for L2 UE-to-UE Relay case

FIG. 15

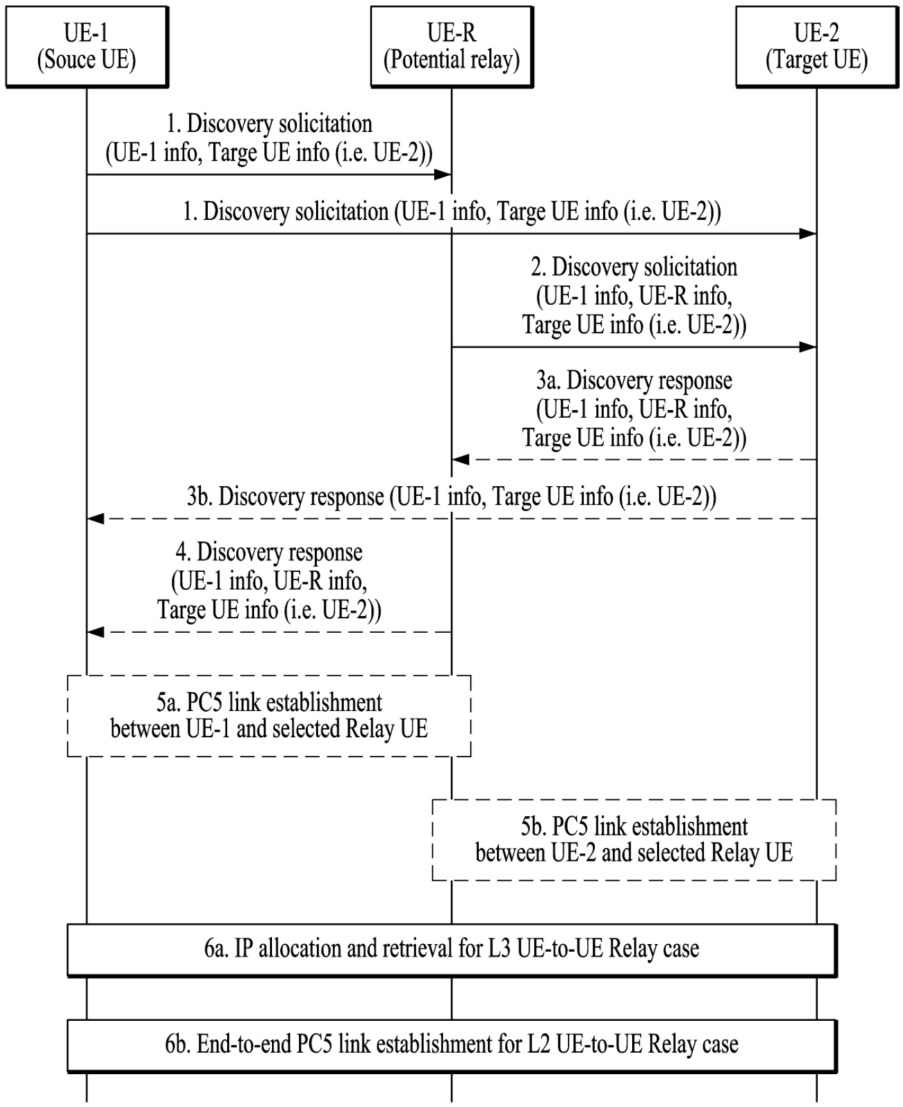
UE-1
(Souce UE)
UE-R
(Potential relay)
UE-2
(Target UE)
1. Discovery solicitation
(UE-1 info, Targe UE info (i.e. UE-2))
1. Discovery solicitation (UE-1 info, Targe UE info (i.e. UE-2))
2. Discovery solicitation
(UE-1 info, UE-R info,
Targe UE info (i.e. UE-2))
3a. Discovery response
(UE-1 info, UE-R info,
Targe UE info (i.e. UE-2))
3b. Discovery response (UE-1 info, Targe UE info (i.e. UE-2))
4. Discovery response
(UE-1 info, UE-R info,
Targe UE info (i.e. UE-2))
5a. PC5 link establishment
between UE-1 and selected Relay UE
5b. PC5 link establishment
between UE-2 and selected Relay UE
6a. IP allocation and retrieval for L3 UE-to-UE Relay case
6b. End-to-end PC5 link establishment for L2 UE-to-UE Relay case

FIG. 16

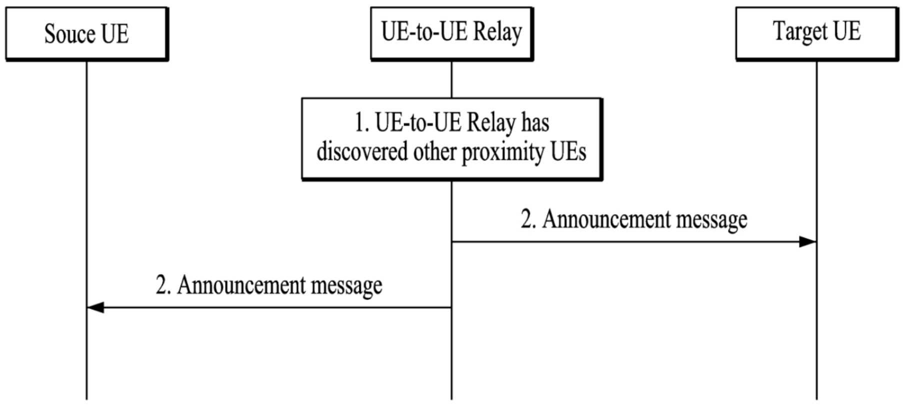
Souce UE
UE-to-UE Relay
Target UE
1. UE-to-UE Relay has discovered other proximity UEs
2. Announcement message
2. Announcement message

FIG. 17

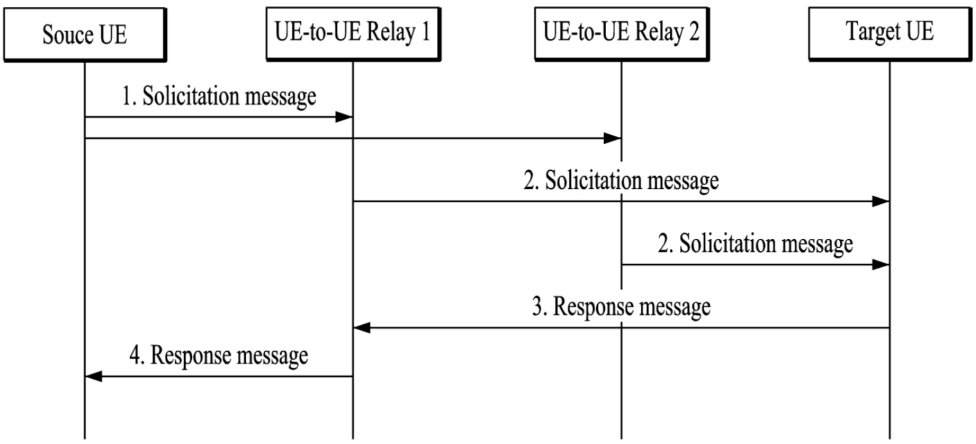
Souce UE
UE-to-UE Relay 1
UE-to-UE Relay 2
Target UE
1. Solicitation message
2. Solicitation message
2. Solicitation message
3. Response message
4. Response message

FIG. 18

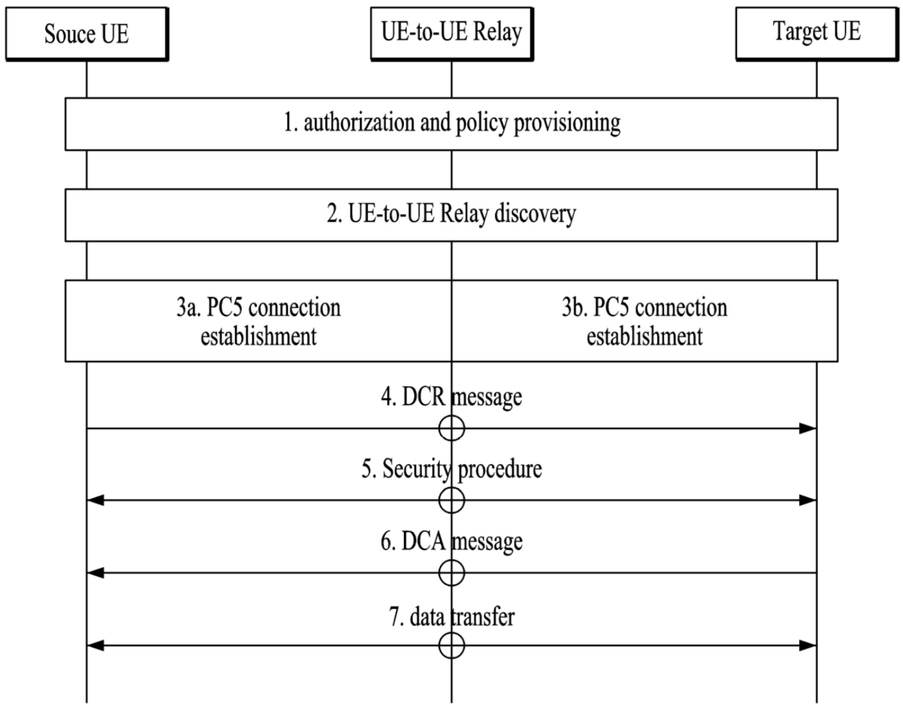
Souce UE
UE-to-UE Relay
Target UE
1. authorization and policy provisioning
2. UE-to-UE Relay discovery
3a. PC5 connection establishment
3b. PC5 connection establishment
4. DCR message
5. Security procedure
6. DCA message
7. data transfer

FIG. 19

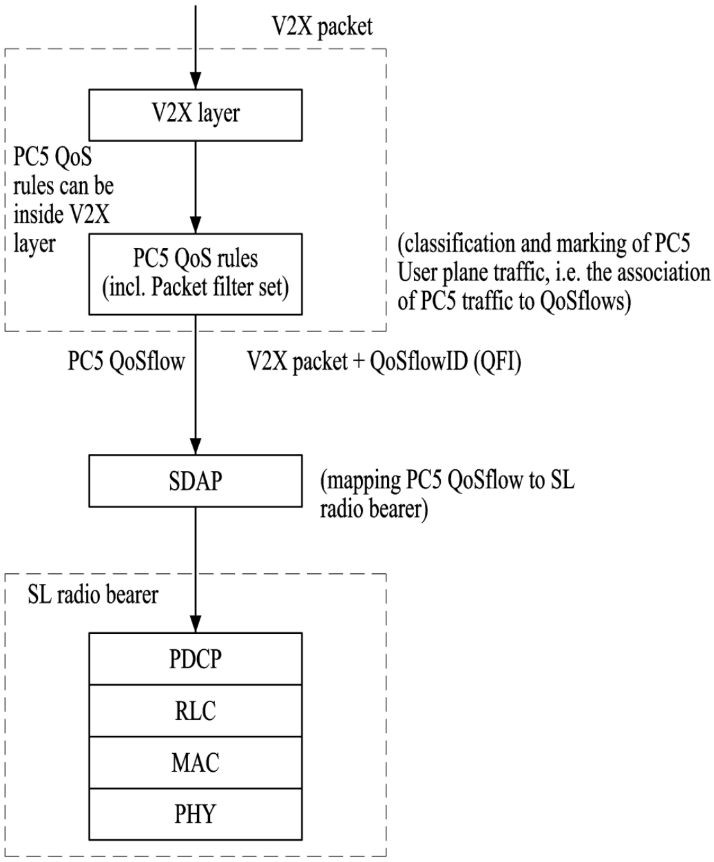
V2X packet
V2X layer
PC5 QoS rules can be inside V2X layer
PC5 QoS rules (incl. Packet filter set)
(classification and marking of PC5 User plane traffic, i.e. the association of PC5 traffic to QoSflows)
PC5 QoSflow
V2X packet + QoSflowID (QFI)
SDAP
(mapping PC5 QoSflow to SL radio bearer)
SL radio bearer
PDCP
RLC
MAC
PHY

FIG. 20

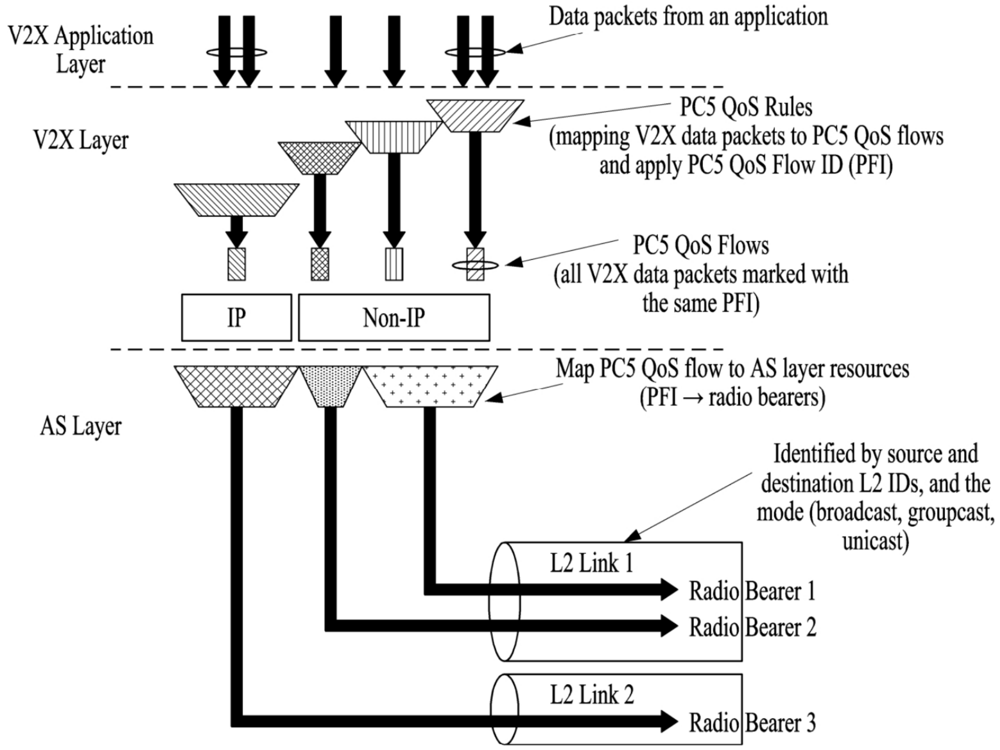
V2X Application Layer
Data packets from an application
V2X Layer
PC5 QoS Rules (mapping V2X data packets to PC5 QoS flows and apply PC5 QoS Flow ID (PFI)
PC5 QoS Flows (all V2X data packets marked with the same PFI)
IP
Non-IP
Map PC5 QoS flow to AS layer resources (PFI → radio bearers)
AS Layer
Identified by source and destination L2 IDs, and the mode (broadcast, groupcast, unicast)
L2 Link 1
Radio Bearer 1
Radio Bearer 2
L2 Link 2
Radio Bearer 3

FIG. 21

(a)

(b)

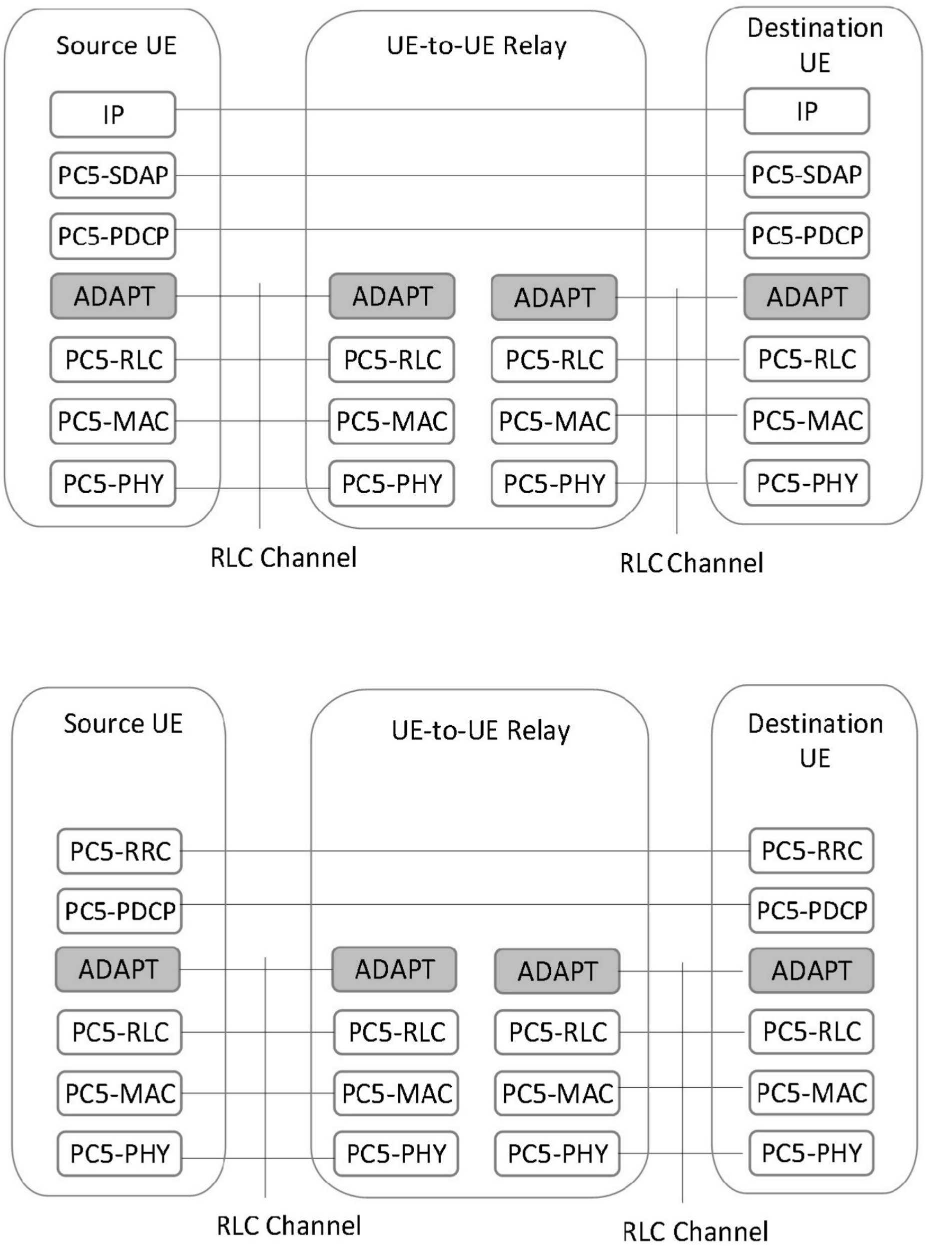
Source UE
UE-to-UE Relay
Destination UE
IP
PC5-SDAP
PC5-PDCP
ADAPT
PC5-RLC
PC5-MAC
PC5-PHY
RLC Channel
RLC Channel
Source UE
UE-to-UE Relay
Destination UE
PC5-RRC
PC5-PDCP
ADAPT
PC5-RLC
PC5-MAC
PC5-PHY
RLC Channel
RLC Channel

FIG. 22

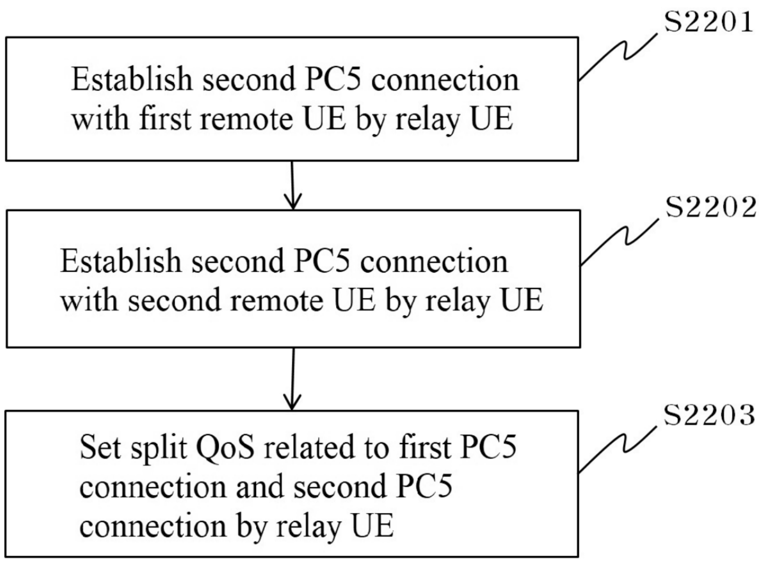
S2201
Establish second PC5 connection with first remote UE by relay UE
S2202
Establish second PC5 connection with second remote UE by relay UE
S2203
Set split QoS related to first PC5 connection and second PC5 connection by relay UE

FIG. 23

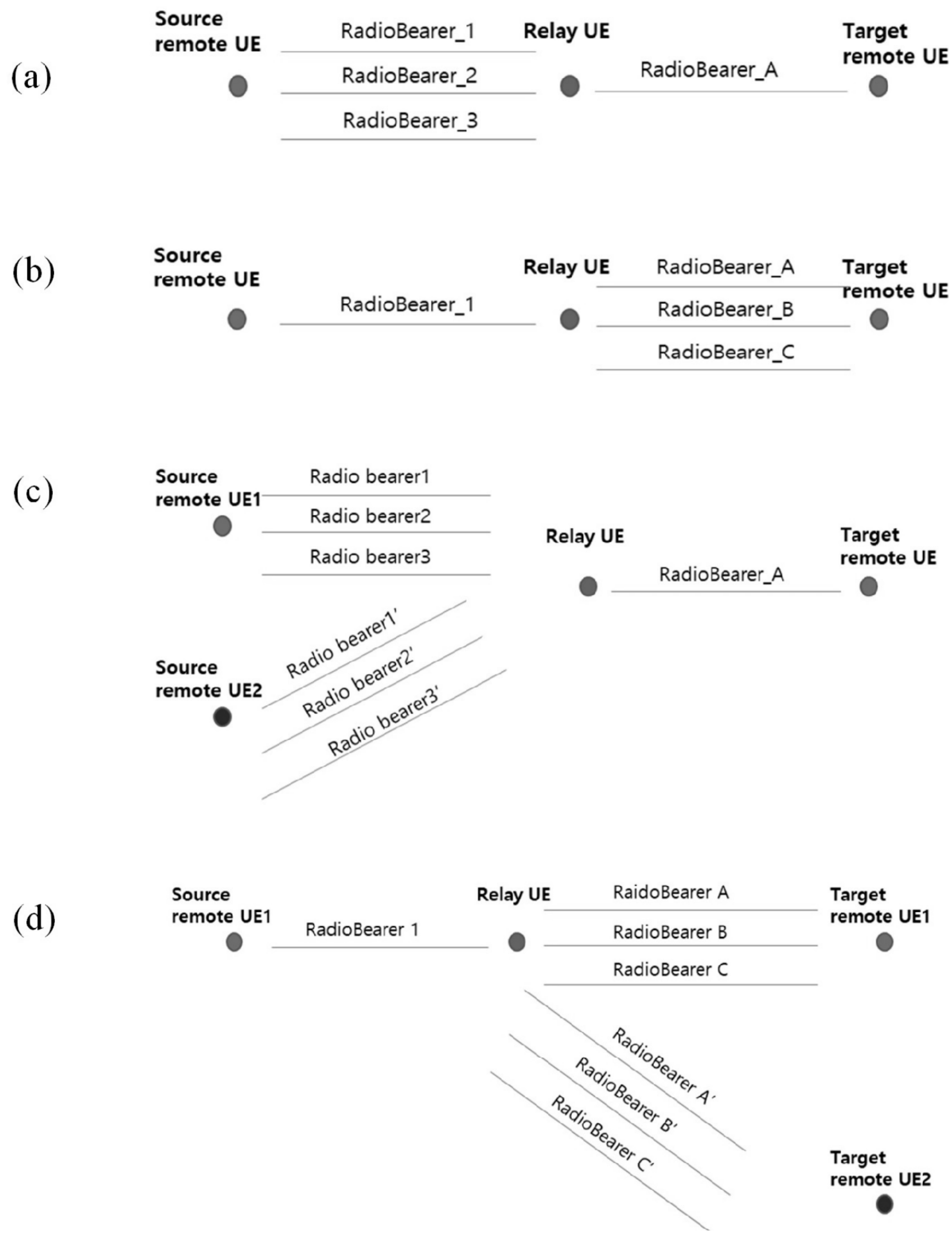
(a)
Source remote UE
RadioBearer_1
RadioBearer_2
RadioBearer_3
Relay UE
RadioBearer_A
Target remote UE
(b)
Source remote UE
RadioBearer_1
Relay UE
RadioBearer_A
RadioBearer_B
RadioBearer_C
Target remote UE
(c)
Source remote UE1
Radio bearer1
Radio bearer2
Radio bearer3
Relay UE
RadioBearer_A
Target remote UE
Source remote UE2
Radio bearer1'
Radio bearer2'
Radio bearer3'
(d)
Source remote UE1
RadioBearer 1
Relay UE
RaidoBearer A
RadioBearer B
RadioBearer C
Target remote UE1
RadioBearer A'
RadioBearer B'
RadioBearer C'
Target remote UE2

FIG. 24

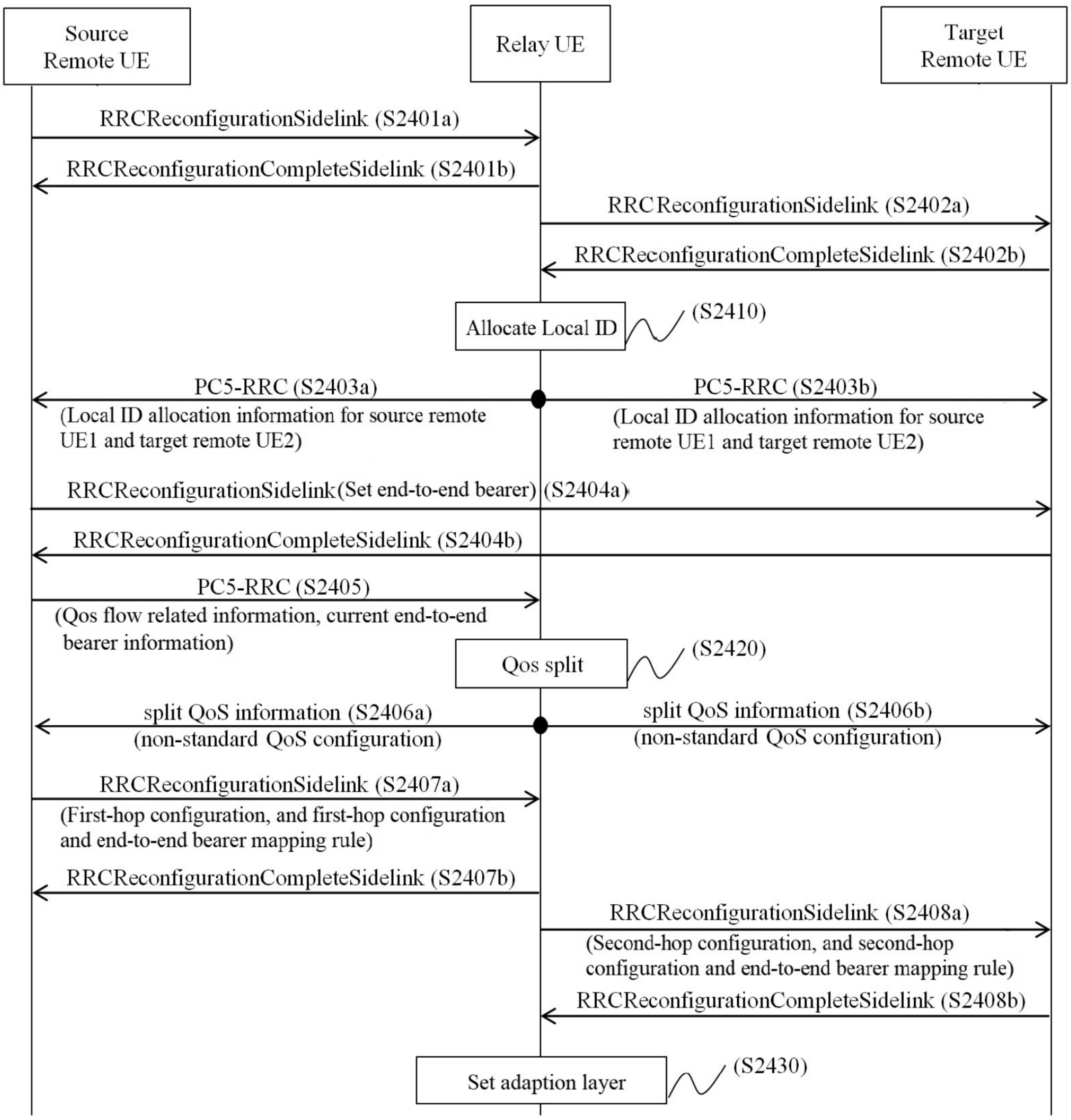
Source Remote UE
Relay UE
Target Remote UE
RRCReconfigurationSidelink (S2401a)
RRCReconfigurationCompleteSidelink (S2401b)
RRCReconfigurationSidelink (S2402a)
RRCReconfigurationCompleteSidelink (S2402b)
Allocate Local ID
(S2410)
PC5-RRC (S2403a)
(Local ID allocation information for source remote UE1 and target remote UE2)
PC5-RRC (S2403b)
(Local ID allocation information for source remote UE1 and target remote UE2)
RRCReconfigurationSidelink(Set end-to-end bearer) (S2404a)
RRCReconfigurationCompleteSidelink (S2404b)
PC5-RRC (S2405)
(Qos flow related information, current end-to-end bearer information)
Qos split
(S2420)
split QoS information (S2406a)
(non-standard QoS configuration)
split QoS information (S2406b)
(non-standard QoS configuration)
RRCReconfigurationSidelink (S2407a)
(First-hop configuration, and first-hop configuration and end-to-end bearer mapping rule)
RRCReconfigurationCompleteSidelink (S2407b)
RRCReconfigurationSidelink (S2408a)
(Second-hop configuration, and second-hop configuration and end-to-end bearer mapping rule)
RRCReconfigurationCompleteSidelink (S2408b)
Set adaption layer
(S2430)

FIG. 25

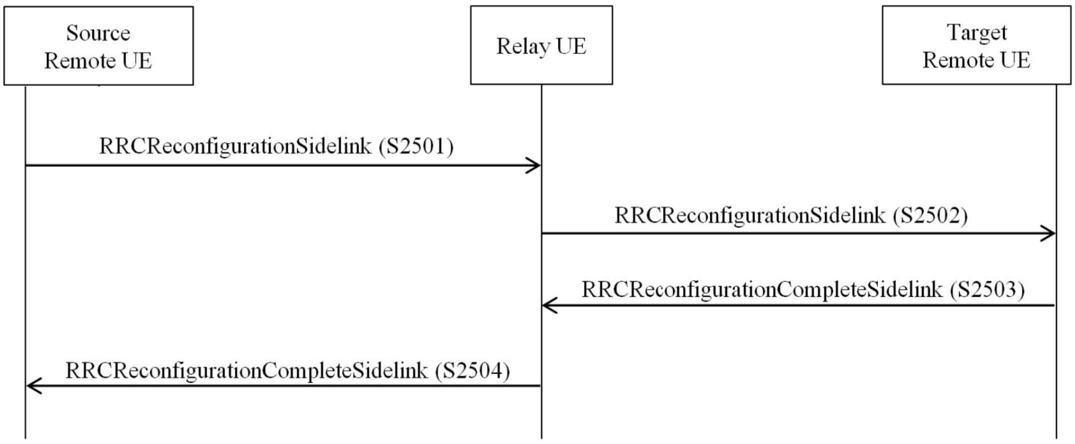
Source Remote UE
Relay UE
Target Remote UE
RRCReconfigurationSidelink (S2501)
RRCReconfigurationSidelink (S2502)
RRCReconfigurationCompleteSidelink (S2503)
RRCReconfigurationCompleteSidelink (S2504)

FIG. 26

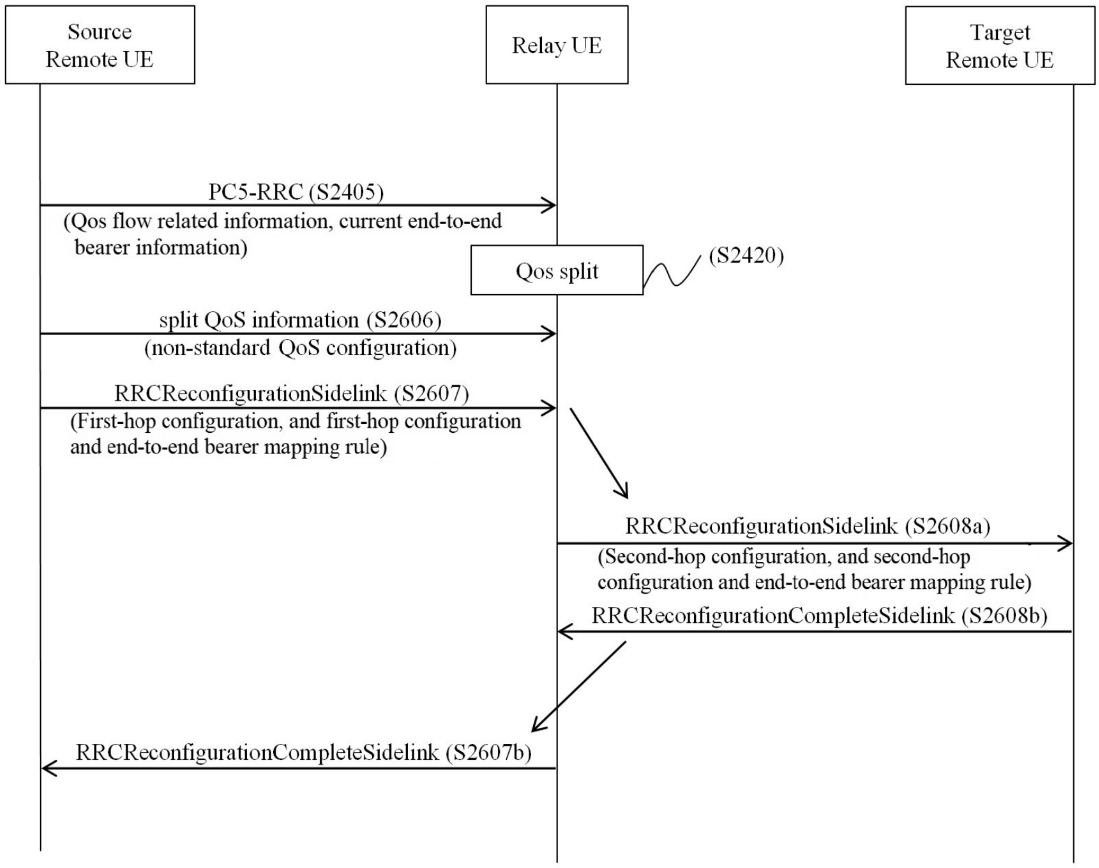
Source Remote UE
Relay UE
Target Remote UE
PC5-RRC (S2405)
(Qos flow related information, current end-to-end bearer information)
Qos split
(S2420)
split QoS information (S2606)
(non-standard QoS configuration)
RRCReconfigurationSidelink (S2607)
(First-hop configuration, and first-hop configuration and end-to-end bearer mapping rule)
RRCReconfigurationSidelink (S2608a)
(Second-hop configuration, and second-hop configuration and end-to-end bearer mapping rule)
RRCReconfigurationCompleteSidelink (S2608b)
RRCReconfigurationCompleteSidelink (S2607b)

FIG. 27

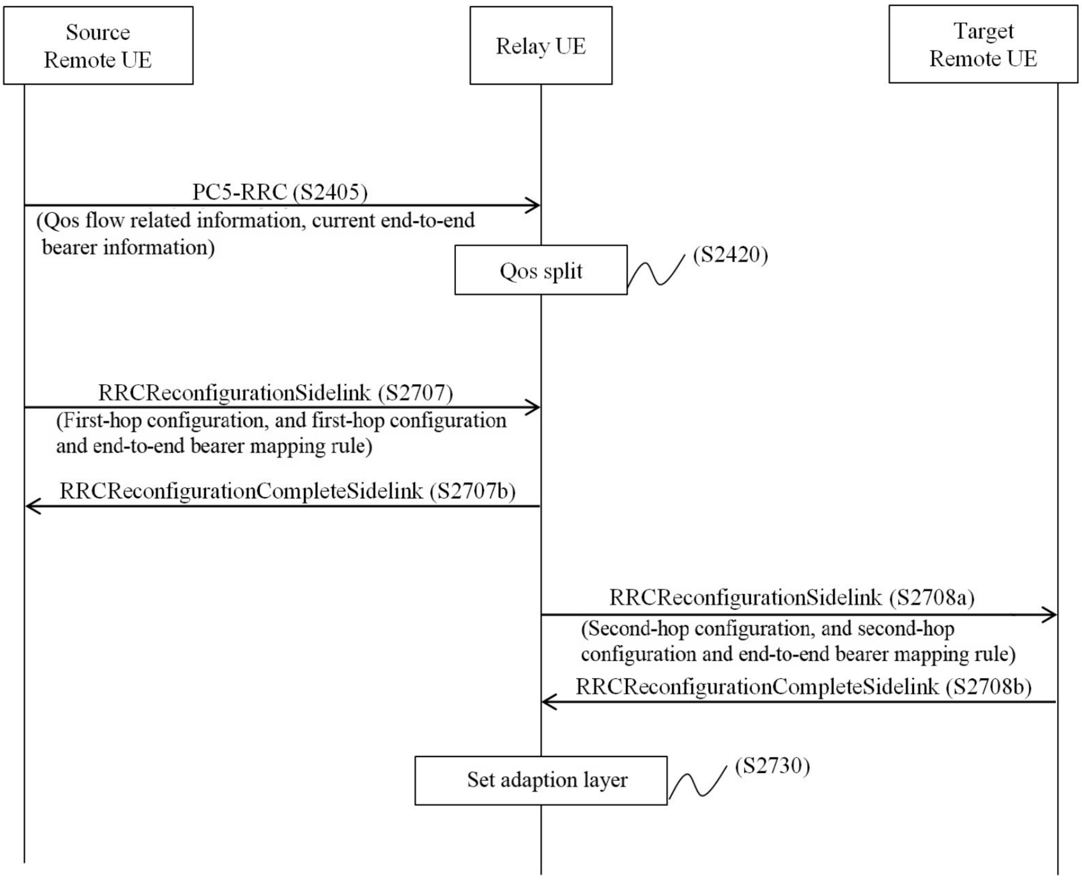
Source
Remote UE
Relay UE
Target
Remote UE
PC5-RRC (S2405)
(Qos flow related information, current end-to-end
bearer information)
Qos split
(S2420)
RRCReconfigurationSidelink (S2707)
(First-hop configuration, and first-hop configuration
and end-to-end bearer mapping rule)
RRCReconfigurationCompleteSidelink (S2707b)
RRCReconfigurationSidelink (S2708a)
(Second-hop configuration, and second-hop
configuration and end-to-end bearer mapping rule)
RRCReconfigurationCompleteSidelink (S2708b)
Set adaption layer
(S2730)

FIG. 28

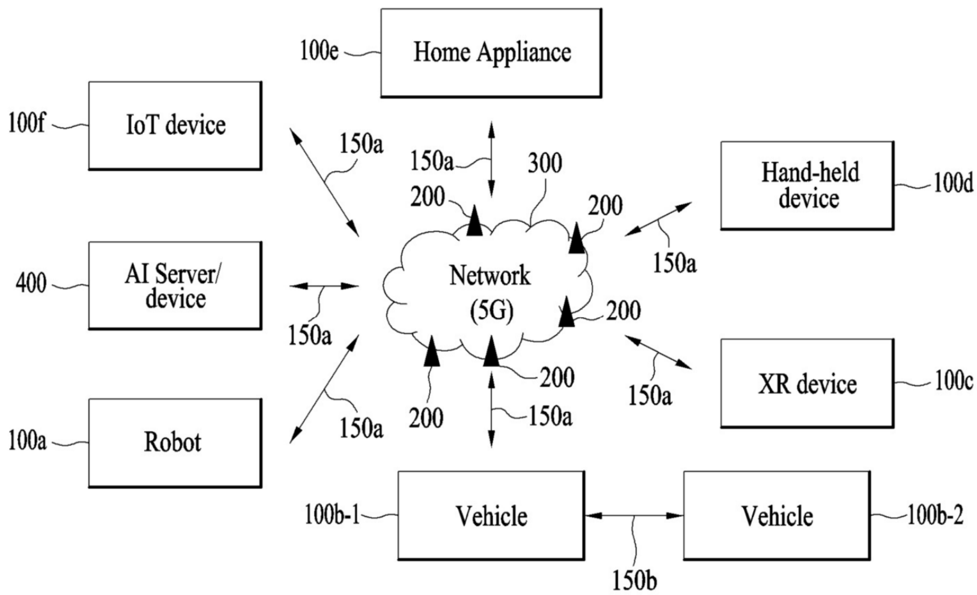
100e
Home Appliance
100f
IoT device
150a
150a
300
200
200
Hand-held device
100d
400
AI Server/ device
Network (5G)
150a
200
150a
200
150a
XR device
100c
100a
Robot
150a
200
150a
100b-1
Vehicle
Vehicle
100b-2
150b

FIG. 29

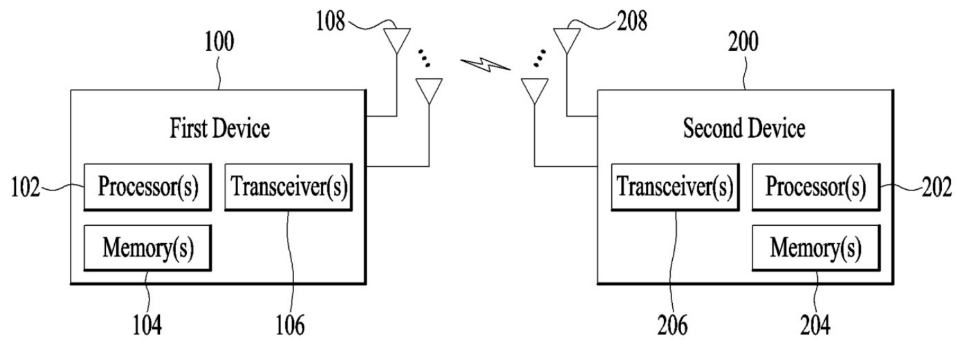
100
108
208
200
First Device
Second Device
102
Processor(s)
Transceiver(s)
Transceiver(s)
Processor(s)
202
Memory(s)
Memory(s)
104
106
206
204

FIG. 30

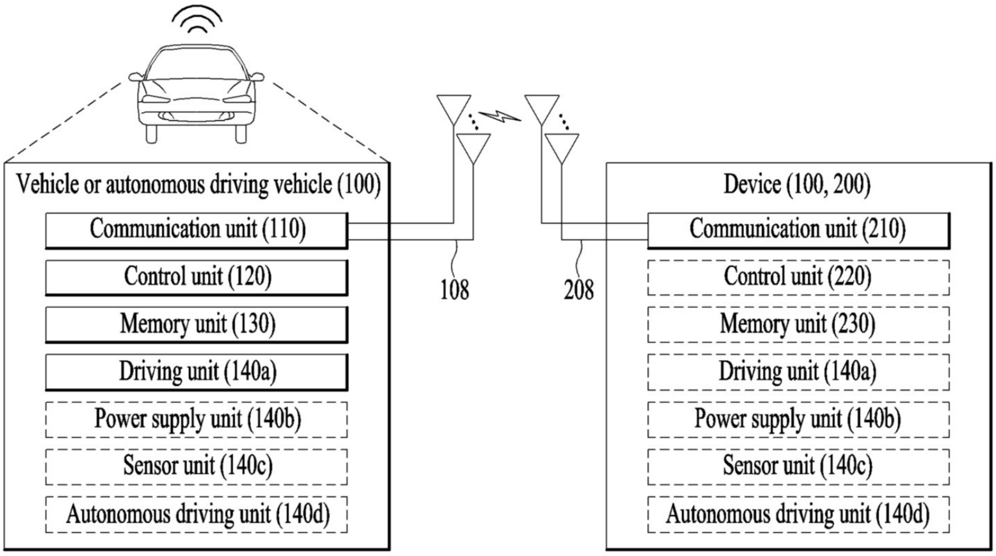
Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)
108
208
Device (100, 200)
Communication unit (210)
Control unit (220)
Memory unit (230)
Driving unit (140a)
Power supply unit (140b)
Sensor unit (140c)
Autonomous driving unit (140d)

FIG. 31

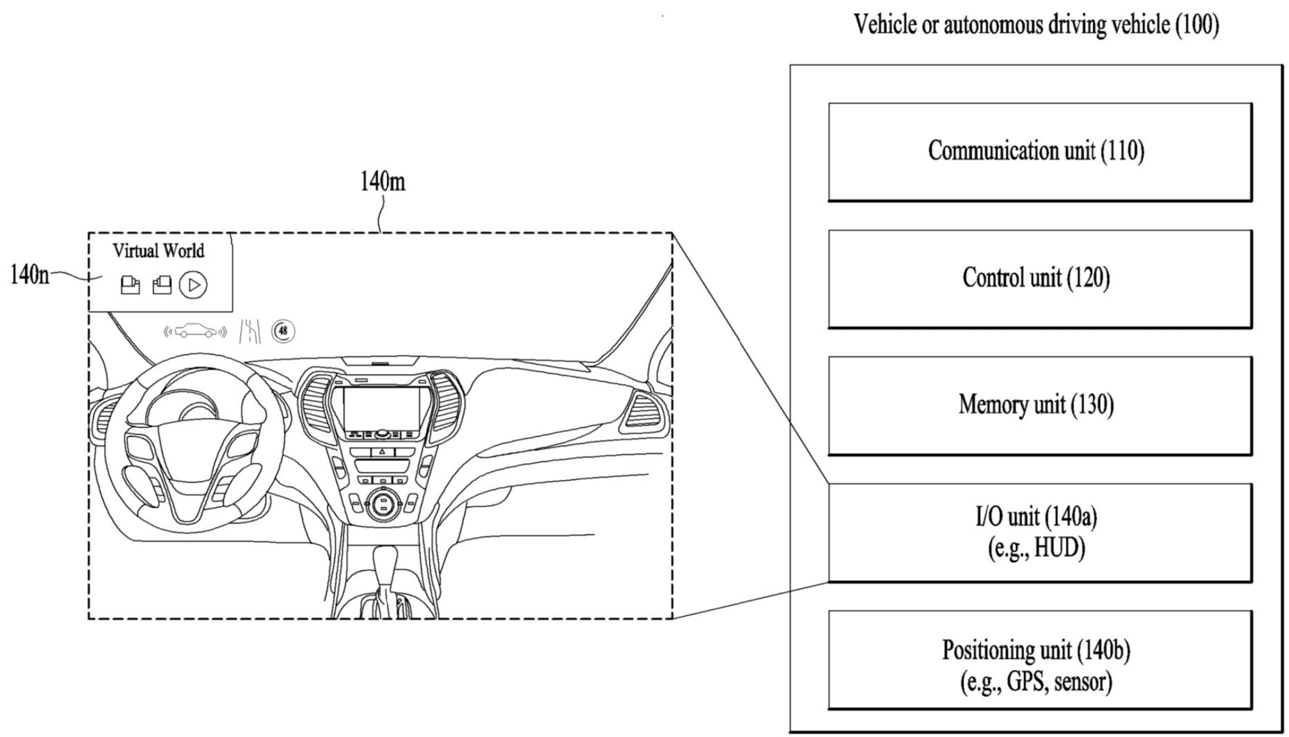
Vehicle or autonomous driving vehicle (100)
Communication unit (110)
Control unit (120)
Memory unit (130)
I/O unit (140a)
(e.g., HUD)
Positioning unit (140b)
(e.g., GPS, sensor)
140m
140n
Virtual World
48

FIG. 32

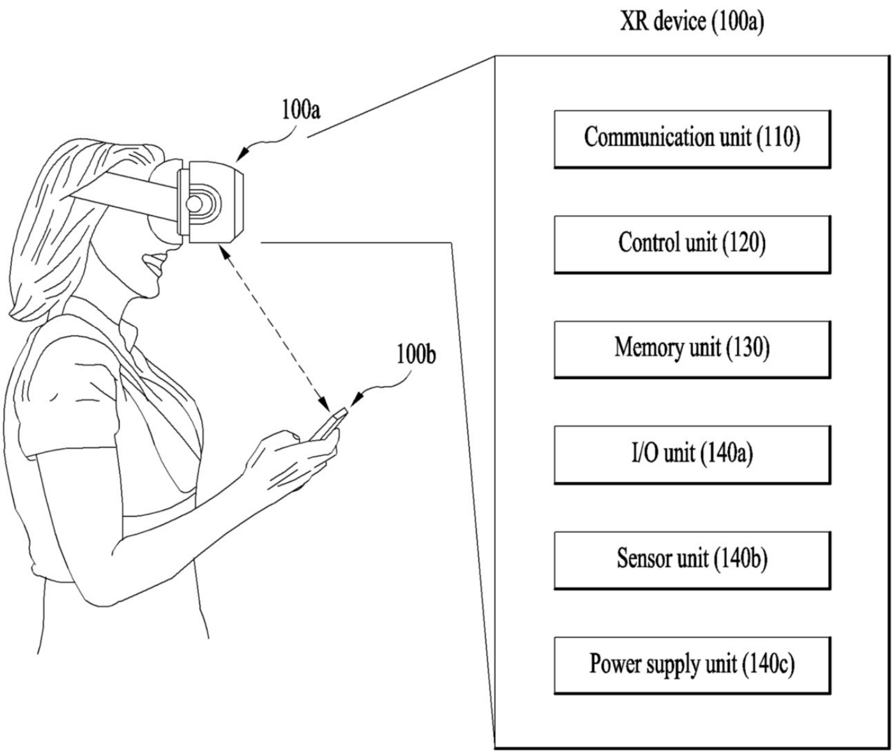
XR device (100a)
100a
100b
Communication unit (110)
Control unit (120)
Memory unit (130)
I/O unit (140a)
Sensor unit (140b)
Power supply unit (140c)

FIG. 33

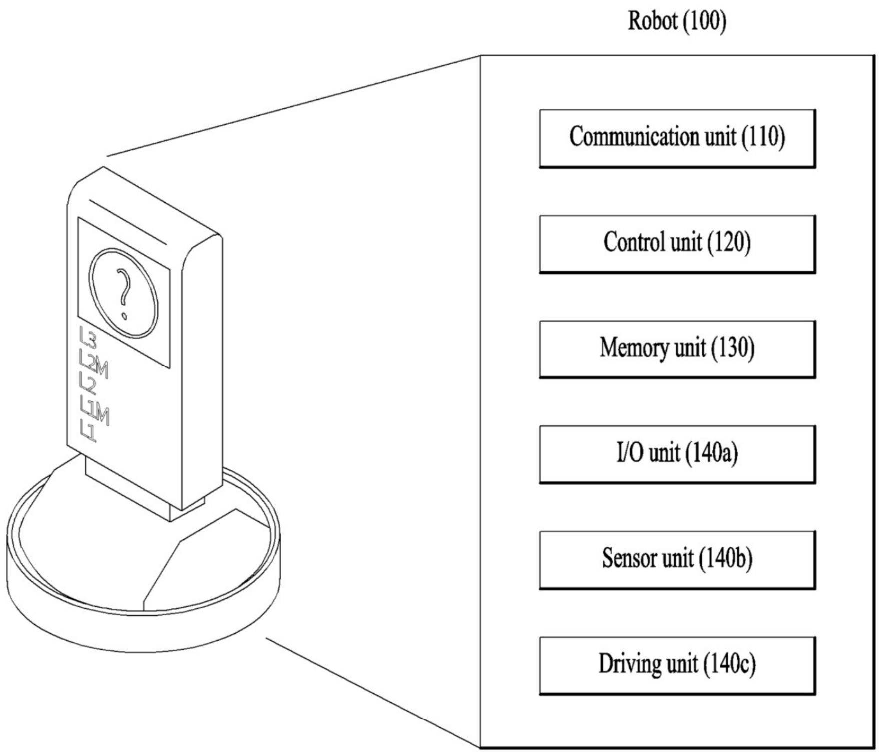
Robot (100)
Communication unit (110)
Control unit (120)
Memory unit (130)
I/O unit (140a)
Sensor unit (140b)
Driving unit (140c)

FIG. 34

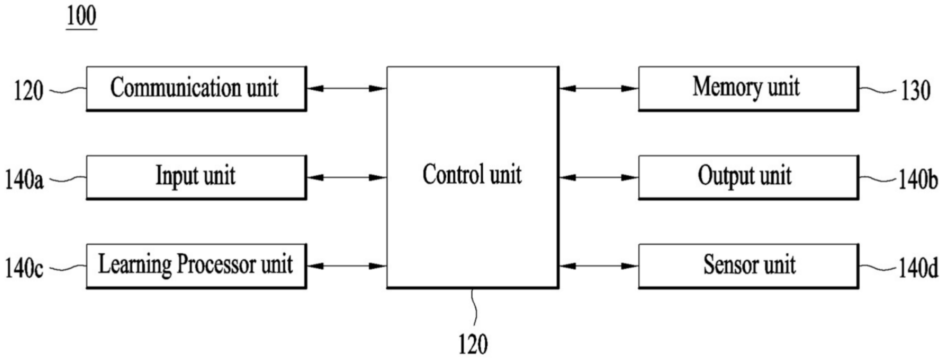
100
120
Communication unit
140a
Input unit
140c
Learning Processor unit
Control unit
120
Memory unit
130
Output unit
140b
Sensor unit
140d

**INTERNATIONAL SEARCH REPORT**

International application No. **PCT/KR2024/006178**

**A. CLASSIFICATION OF SUBJECT MATTER**

**H04W 76/14**(2018.01)i; **H04W 8/00**(2009.01)i; **H04W 28/02**(2009.01)i; **H04W 88/04**(2009.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 76/14(2018.01); H04W 28/02(2009.01); H04W 28/24(2009.01); H04W 40/02(2009.01); H04W 40/22(2009.01); H04W 72/08(2009.01); H04W 88/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 릴레이 UE(relay UE), 리모트 UE(remote UE), QoS(quality of service), 연결(connection), 식별정보(identifier), 보고(report)

**C. DOCUMENTS CONSIDERED TO BE RELEVANT**

| Category* | Citation of document, with indication, where appropriate, of the relevant passages | Relevant to claim No. |
|---|---|---|
| Y | WO 2022-205117 A1 (APPLE INC. et al.) 06 October 2022 (2022-10-06)<br>See paragraphs [0019]-[0025] and [0061]-[0064]; claims 1-5; and figures 1 and 4A-4B. | 1-12 |
| Y | WO 2023-004529 A1 (QUALCOMM INCORPORATED et al.) 02 February 2023 (2023-02-02)<br>See paragraphs [0117] and [0139]-[0142]. | 1-12 |
| A | WO 2022-135336 A1 (SHARP KABUSHIKI KAISHA et al.) 30 June 2022 (2022-06-30)<br>See claims 1-10. | 1-12 |
| A | US 2022-0132605 A1 (ASUSTEK COMPUTER INC.) 28 April 2022 (2022-04-28)<br>See claims 1-14. | 1-12 |
| A | WO 2022-212548 A1 (IDAC HOLDINGS, INC.) 06 October 2022 (2022-10-06)<br>See claims 1-21. | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 August 2024** | **19 August 2024** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

Form PCT/ISA/210 (second sheet) (July 2022)

**INTERNATIONAL SEARCH REPORT**
**Information on patent family members**

International application No.
**PCT/KR2024/006178**

| Patent document cited in search report | Publication date (day/month/year) | Patent family member(s) | Publication date (day/month/year) |
|---|---|---|---|
| WO 2022-205117 A1 | 06 October 2022 | CN 117044289 A | 10 November 2023 |
| | | US 2024-0049104 A1 | 08 February 2024 |
| WO 2023-004529 A1 | 02 February 2023 | None | |
| WO 2022-135336 A1 | 30 June 2022 | CN 114666848 A | 24 June 2022 |
| | | US 2024-0040438 A1 | 01 February 2024 |
| US 2022-0132605 A1 | 28 April 2022 | CN 114257970 A | 29 March 2022 |
| | | CN 114257970 B | 30 May 2023 |
| | | EP 3972380 A1 | 23 March 2022 |
| | | EP 3972380 B1 | 22 February 2023 |
| | | ES 2942038 T3 | 29 May 2023 |
| | | KR 10-2022-0039587 A | 29 March 2022 |
| | | KR 10-2498723 B1 | 10 February 2023 |
| | | US 11259350 B1 | 22 February 2022 |
| WO 2022-212548 A1 | 06 October 2022 | CN 117322056 A | 29 December 2023 |
| | | EP 4315989 A1 | 07 February 2024 |
| | | US 2024-0187935 A1 | 06 June 2024 |

Form PCT/ISA/210 (patent family annex) (July 2022)